# EUROPÄISCHE PATENTSCHRIFT

(11) **EP 2 529 898 B1**
(45) Veröffentlichungstag und Bekanntmachung des Hinweises auf die Patenterteilung: **08.04.2015**
(21) Anmeldenummer: 12004146.2
(22) Anmeldetag: 30.05.2012
(51) Int. Cl.: B25J 15/04

(54) **Vorrichtung und Verfahren zum lösbaren Befestigen eines Greifers**
Device and method for reversible fixing of a gripper
Dispositif et procédé destinés à la fixation amovible d'une poignée

(30) Priorität: 01.06.2011 DE 102011103097
(43) Veröffentlichungstag der Anmeldung: 05.12.2012
(73) Patentinhaber: Weber Maschinenbau GmbH Breidenbach, 35236 Breidenbach (DE)
(72) Erfinder:
(74) Vertreter: Grünecker Patent- und Rechtsanwälte PartG mbB

(56) Entgegenhaltungen:
- WO-A-91/09405
- WO-A1-2010/028113
- WO-A2-2004/069492
- DE-A1-102007 038 791
- DE-U1-202009 001 569
- US-A- 5 261 758
- US-A1- 2010 307 279

## Beschreibung

Die vorliegende Erfindung bezieht sich auf eine Vorrichtung und ein Verfahren zum lösbaren Befestigen eines Greifers an einem Roboter, insbesondere einem Delta-Roboter. Die Vorrichtung weist eine Aufnahmeeinheit und eine Koppeleinheit auf, zwischen denen wenigstens ein form- und/oder kraftschlüssiges Verbindungsmittel vorgesehen ist.

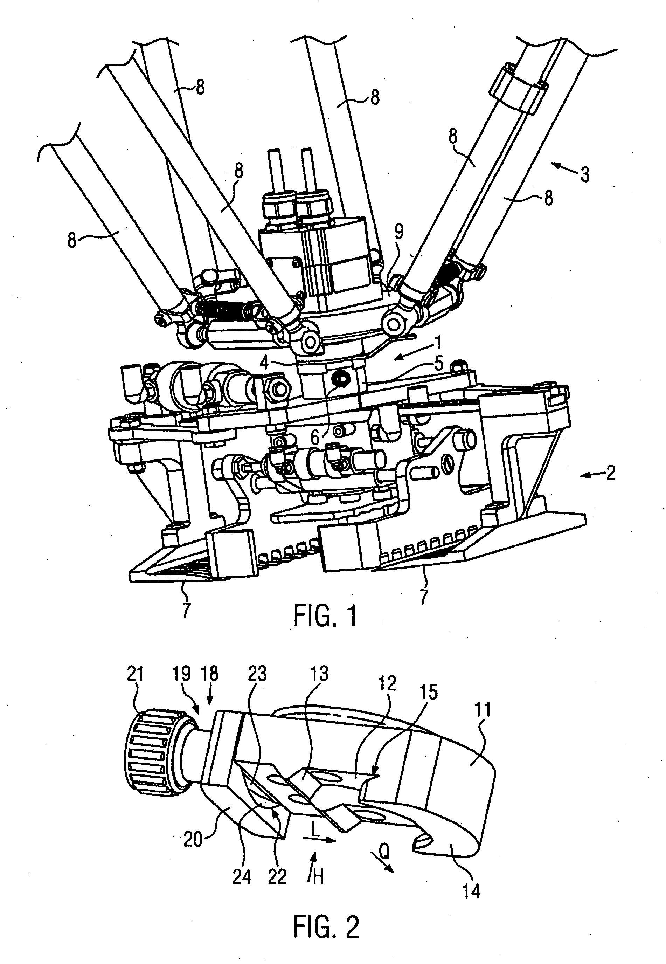

Derartige Vorrichtungen sind im Stand der Technik bekannt. In Figur 1 ist beispielsweise eine Befestigungsvorrichtung 1 dargestellt, die zwischen einem Greifer 2 und einem Delta-Roboter 3 angeordnet ist. Damit der Delta-Roboter 3 mit einer Vielzahl von verschiedenen Greifern 2 bestückt werden kann, wird ein vorstehendes Teil einer Aufnahmeeinheit 4, die am Delta-Roboter 3 befestigt ist, in eine Koppeleinheit 5 des Greifers 2 eingesetzt. Die Aufnahmeeinheit 4 und die Koppeleinheit 5 werden mit einer Schraube 6 aneinander befestigt. Nachteilig bei einem solchen System ist, dass das Eindrehen der Schraube relativ aufwändig ist, und geeignetes Werkzeug benötigt wird, um die Schraube mit der nötigen Kraft anzuziehen.

Die WO 2010/028113 A1 offenbart eine Vorrichtung zum Austausch von Werkzeug an einem Roboter, bei der ein Teil einer Koppelvorrichtung, der einen Bolzen aufweist, in eine Ausnehmung eines zweiten Teils der Koppelvorrichtung eingesetzt wird. Durch Betätigen eines Hebels kann der Bolzen so gedreht werden, dass davon hervorstehende Tabs unter Vorsprünge an der Außenwand der Ausnehmung in der Aufnahmeeinheit zu liegen kommen. Nachteilig bei einer solchen Vorrichtung ist, dass die beiden Teile der Koppelvorrichtung bis zum Betätigen des Hebels aneinander gehalten werden müssen. Außerdem ist die Koppelvorrichtung, die an dem austauschbaren Werkzeug angebracht sein muss, relativ aufwändig herzustellen.

Ausgehend vom bekannten Stand der Technik ist es die Aufgabe der vorliegenden Erfindung eine Vorrichtung und ein Verfahren zum lösbaren Befestigen eines Greifers bereitzustellen, die den Greiferwechsel einfacher und schneller gestalten.

Eine derartig verbesserte Vorrichtung wird dadurch ermöglicht, dass die Aufnahmeeinheit einen mit einem Hinterschnitt versehenen Anschlag zur Aufnahme eines ersten Abschnitts der Koppeleinheit aufweist, dass die Aufnahmeeinheit und die Koppeleinheit weiterhin komplementäre Formelemente aufweisen, die ausgelegt sind, ineinander eingesetzt zu werden, und dass die Aufnahmeeinheit weiterhin ein Spannelement aufweist, um die Koppeleinheit im Anschlag der Aufnahmeeinheit zu halten.

Durch den Hinterschnitt wird der erste Abschnitt der Koppeleinheit mittels eines Formschlusses gehalten. Somit wird das Spannelement entlastet, und muss lediglich sicherstellen, dass die Koppeleinheit im Anschlag der Aufnahmeeinheit verbleibt. Weiterhin gestaltet sich der Einsetzvorgang einfacher, da das Einsetzen des Koppelelements in den Anschlag einfach ausgeführt werden kann, und bereits die Position zwischen der Aufnahmeeinheit und der Koppeleinheit im Wesentlichen festlegt. Dann wird das Spannelement derart betätigt, dass die Koppeleinheit im Anschlag vollends festgelegt wird. Um zu verhindern, dass die Koppeleinheit in einer ungewünschten Orientierung in die Aufnahmeeinheit eingesetzt werden kann, sind komplementäre Formelemente vorgesehen, die lediglich in der vorgesehenen Orientierung ineinander eingreifen und somit ein Einsetzen der Koppeleinheit in die Aufnahmeeinheit erlauben. Bei einer falschen Orientierung der Koppeleinheit bezüglich der Aufnahmeeinheit können die komplementären Formelemente nicht ineinander eingreifen, so dass ein Einsetzen der Koppeleinheit in die Aufnahmeeinheit nicht möglich ist. Dies ist einfach festzustellen, und der jeweilige Benutzer kann eine Reorientierung der Koppeleinheit vornehmen.

In anderen Ausführungsformen können die komplementären Formelemente auch weggelassen werden, und es wird dennoch die Aufgabe der Erfindung erfüllt.

Die komplementären Formelemente sind insbesondere so ausgelegt, dass die Koppeleinheit in nur einer Orientierung in die Aufnahmeeinheit eingesetzt werden kann.

Vorteilhafterweise ist die Aufnahmeeinheit am Roboter vorgesehen, und die Koppeleinheit am Greifer. Gewöhnlicherweise ist die Aufnahmeeinheit ein komplex gestaltetes Bauteil, das bei einer Vielzahl von Greifern aber nur einmal am Roboter vorgehalten werden muss, während die relativ einfach gestaltete Koppeleinheit an jedem Greifer ausgebildet ist. In anderen Anwendungsfällen, wo beispielsweise aufwändiger gestaltete Greifer mit einer Vielzahl von verschiedenen einfach gestalteten Robotern verwendet werden, ist es aber auch möglich, dass die Aufnahmeeinheit am Greifer, und die einfacher gestaltete Koppeleinheit am Roboter vorgesehen ist.

In einem Ausführungsbeispiel ist das Formelement der Aufnahmeeinheit eine Erhebung, und das Formelement der Koppeleinheit eine dazu komplementäre Ausnehmung. Folglich kann die Oberfläche der Koppeleinheit ohne vorstehende Bereiche ausgestaltet werden, wodurch die Greifer kompakter gestaltet werden können. Zudem kann die Koppeleinheit einfacher und damit kostengünstiger hergestellt werden.

In anderen Ausführungsbeispielen ist es aber auch möglich, dass das Formelement der Koppeleinheit eine Erhebung ist, und das Formelement der Aufnahmeeinheit eine dazu komplementäre Ausnehmung.

Vorteilhafterweise ist die Erhebung und die Ausnehmung jeweils wenigstens in Bereichen konisch gestaltet, so dass auch bei nicht exakter Ausrichtung ein Einsetzen der Erhebung in die Ausnehmung geführt und somit vereinfacht wird.

Vereinfachenderweise kann die Normale der Grundflächen der Aufnahmeeinheit und Koppeleinheit als Hochrichtung definiert werden, wobei darauf hingewiesen wird, dass aufgrund des beweglichen Charakter eines Roboters diese Richtung sowohl zwischen dem Greiferwechsel als auch im Moment des Greiferwechsels keinesfalls nur in Hochrichtung liegen kann. Orthogonal zur Hochrichtung wird die Längsrichtung definiert, die die Richtung angibt, in der die Koppeleinheit in den Hinterschnitt des Anschlags der Aufnahmeeinheit hineinreicht. Eine Querrichtung ist orthogonal sowohl zur Hochrichtung, als auch zur Längsrichtung definiert.

Die Nut verläuft im Wesentlichen in Querrichtung als Erstreckungsrichtung. Die Nut ist dabei vornehmlich in Längsrichtung zurückgesetzt.

Insbesondere kann die Nut eine stetig ausgebildete Form aufweisen, wobei insbesondere der Krümmungsradius dieser Form konstant sein kann, das heißt sie bildet den Umfang eines Kreissegments.

Dadurch, dass die Nut nicht nur als geradlinige Nut mit gleicher Tiefe in Querrichtung verläuft, kann ermöglicht werden, dass die Nut auch einen Formschluss in Querrichtung bereitstellt, so dass eine Verschiebung der Koppeleinheit in der Aufnahmeeinheit in Querrichtung nicht möglich ist. Dennoch gestaltet sich das Einsetzen der Koppeleinheit relativ einfach, da die Koppeleinheit auch in leicht falsch ausgerichtetem Zustand zunächst in den Anschlag eingesetzt werden kann. Dort kann sie dann richtig ausgerichtet werden, bis der erste Abschnitt in vorgesehener Weise vom Hinterschnitt des Anschlags aufgenommen ist.

Alternativ zur Ausgestaltung der Vertiefung als Nut, kann die Vertiefung beispielsweise auch als Ausnehmung oder als Bohrloch ausgebildet werden, in die ein entsprechender Vorsprung der Koppeleinheit eingesetzt werden kann.

Auch kann als Anschlag ein Vorsprung an der Aufnahmeeinheit vorgesehen sein, der in eine Ausnehmung in der Koppeleinheit eingesetzt werden kann.

Vorteilhafterweise ist der Anschlag als Nut mit zueinander konisch verlaufenden Seitenflächen ausgebildet, wobei der erste Abschnitt der Koppeleinheit eine komplementäre konische Form aufweist, so dass ein spielfreier Sitz des ersten Abschnitts der Koppeleinheit im Anschlag der Aufnahmeeinheit gewährleistet wird. Die konische Form des ersten Abschnitts ist insbesondere eine sich verjüngende Form in Längsrichtung, wobei die konisch verlaufenden Seitenfläche der Nut, diese in Längsrichtung verengen. Beim Einsetzen des ersten Abschnitts der Koppeleinheit in den Anschlag der Aufnahmeeinheit kommen die entsprechenden, im gleichen Winkel geneigten, konischen Flächen in Kontakt miteinander, und legen somit die Position des ersten Abschnitts der Koppeleinheit spielfrei im Anschlag der Aufnahmeeinheit fest. Die konisch verlaufenden Seitenfläche bieten zudem den Vorteil, dass der Einsetzvorgang der Koppeleinheit in den Anschlag der Aufnahmeeinheit vereinfacht wird.

Insbesondere sind das Spannelement und der Anschlag voneinander beabstandet auf der Aufnahmeeinheit vorgesehen, so dass die Koppeleinheit dazwischen eingelegt werden kann. Weiterhin sind das Spannelement und der Anschlag vornehmlich auf gegenüberliegenden Seiten bezüglich der Koppeleinheit vorgesehen. Damit kann von beiden Seiten eine kraft- oder formschlüssige Verbindung von der Aufnahmeeinheit auf die Koppeleinheit aufgebracht werden, die somit vorteilhaft festgelegt wird. Natürlich ist es auch möglich, dass mehrere Spannelemente und/oder mehrere mit einem Hinterschnitt versehene Anschläge in der Aufnahmeeinheit vorgesehen sind, die dann vornehmlich entlang des Umfangs der Aufnahmeeinheit verteilt sind.

Vorteilhafterweise sind das Spannelement und der Anschlag an zwei gegenüberliegenden Seiten einer Grundplatte der Aufnahmeeinheit vorgesehen, und die komplementären Formelemente sind zwischen dem Spannelement und dem Anschlag vorgesehen. Somit sind die komplementären Formelemente im Erstreckungsbereich der Koppeleinheit angeordnet, und können ohne das Vorsehen von weiteren Nebenflächen sicherstellen, dass die Koppeleinheit nur in der richtigen Orientierung in die Aufnahmeeinheit eingesetzt werden kann.

In einem Ausführungsbeispiel weist das Spannelement einen Anschlag mit einem Hinterschnitt auf, der ausgelegt ist, einen zweiten Abschnitt der Koppeleinheit aufzunehmen, der dem ersten Abschnitt der Koppeleinheit gegenüberliegt. Während der Anschlag der Aufnahmeeinheit zur Aufnahme des ersten Abschnitts der Koppeleinheit vornehmlich ortsfest angeordnet ist, ist der Anschlag des Spannelements in einem beweglichen Bauteil, insbesondere einer Spannplatte, vorgesehen. Sobald die Koppeleinheit mit dem ersten Abschnitt in den Hinterschnitt des Anschlags der Aufnahmeeinheit eingesetzt ist, kann das Spannelement so auf die Koppeleinheit zubewegt werden, dass der zweite Abschnitt der Koppeleinheit in Eingriff mit dem Anschlag des Spannelements kommt, und durch dessen Hinterschnitt gehalten wird. Insbesondere sind der erste und zweite Abschnitt auf gegenüberliegenden Seiten der Koppeleinheit vorgesehen.

Vorteilhafterweise ist der Anschlag des Spannelements eine in ihrem mittleren Erstreckungsbereich zurückgesetzte Nut mit konischen Seitenflächen, wobei der zweite Abschnitt der Koppeleinheit ebenfalls konisch ausgebildet ist. Der Erstreckungsbereich der Nut des Spannelements ist vornehmlich auch im Wesentlichen die Querrichtung. Der Effekt des Zurücksetzens der Nut ist, dass eine Festlegung in Querrichtung ermöglicht wird. Die konischen Seitenflächen ermöglichen, dass ein spielfreier Sitz des zweiten Abschnitts der Koppeleinheit in der Nut gewährleistet wird. Die Merkmale der im mittleren Erstreckungsbereich zurückgesetzten Nut und der konischen Seitenflächen können auch einzeln vorgesehen werden, ohne dass das jeweils andere Merkmal vorgesehen werden muss.

Vorteilhafterweise weist das Spannelement eine Spannplatte auf, in der der Anschlag ausgebildet ist, und eine Schraube um die Spannplatte in Richtung der Koppeleinheit festzulegen und/oder vorzuspannen. Eine reine Festlegung kann durch einen Formschluss erreicht werden, wenn die Schraube die Spannplatte gegen einen Anschlag an der Aufnahmeeinheit drückt, ohne dass eine Kraft in dieser Richtung auf die Koppeleinheit aufgebracht wird. Bevorzugt ist aber, die Schraube derart anzuziehen, dass von der Spannplatte eine Vorspannkraft auf die Koppeleinheit aufgebracht wird. Die Schraube erstreckt sich vornehmlich in Längsrichtung, damit sie die Koppeleinheit in den mit dem Hinterschnitt versehenen Anschlag der Aufnahmeeinheit drücken kann.

Vorteilhafterweise weist die Schraube einen Handgriff auf. Da die Schraube lediglich die Spannplatte in der geeigneten Position befestigen muss, ist eine geringere Schraubkraft, als bei der vorbekannten Befestigungsvorrichtung notwendig. Damit ist es möglich, dass die Handkraft, die auf den Handgriff aufgebracht wird, ausreicht, eine Befestigung der Koppeleinheit an der Aufnahmeeinheit zu ermöglichen. Dies steigert wesentlich die Einfachheit und die Schnelligkeit der Montage.

In manchen Ausführungsformen kann die Spannplatte auch flach ausgebildet sein, so dass sie lediglich eine Kraft in Längsrichtung auf die Koppeleinheit aufbringt, während in Hochrichtung kein Formschluss vorliegt, sondern vornehmlich ein Kraftschluss aufgrund der Reibkraft in Hochrichtung. Allerdings liegt dadurch, dass die Koppeleinheit mit ihrem ersten Abschnitt den Anschlag der Aufnahmeeinheit hintergreift, zusätzlich ein Formschluss vor. Sollte sich die Koppeleinheit wesentlich bezüglich der Spannplatte bewegen, liegt auch durch die Ausgestaltung der Spannplatte ein weiterer Formschluss vor, so dass ein Herausfallen der Koppeleinheit ausgeschlossen werden kann.

Vorteilhafterweise wird der Anschlag durch eine Vertiefung in einer Seitenwand an der Aufnahmeeinheit gebildet, so dass der Hinterschnitt geformt wird. Grundsätzlich weisen sowohl die Aufnahmeeinheit als auch die Koppeleinheit eine Grundfläche auf, die bei befestigtem Greifer aneinander anliegen oder in nächster Nähe zueinander angeordnet sind. Die Seitenwand ist vornehmlich im Wesentlichen im rechten Winkel zur Grundfläche der Aufnahmeeinheit angeordnet. Die Seitenwand kann grundsätzlich auch nur durch einen Absatz in der Aufnahmeeinheit gebildet werden. In der Seitenwand ist dann die entsprechende Vertiefung gebildet, so dass der erste Abschnitt der Koppeleinheit in der Seitenwand aufgenommen werden kann, und somit das Material der Seitenwand so hintergreift, dass ein Hinterschnitt geformt wird.

Vorteilhafterweise ist die Vertiefung des Anschlags als Nut gebildet, die in Erstreckungsrichtung der Seitenwand verläuft, wobei die Nut eine in ihrem in Erstreckungsrichtung mittleren Bereich zurückgesetzte Form aufweist, so dass eine sichere Festlegung der Koppeleinheit in Erstreckungsrichtung der Nut ermöglicht wird.

In einer Ausführungsform ist der Anschlag in einem Gegenspannelement ausgebildet, das ausgelegt ist, sich relativ zu einem Zentralelement der Aufnahmeeinheit in einer zur Bewegung des Spannelements gegenüberliegenden Richtung zu bewegen, um die Koppeleinheit zwischen dem Spannelement und dem Gegenspannelement zu befestigen. Durch das gleichzeitige Verstellen des Spannelements und des Gegenspannelements kann mit einer geringeren Verschiebung von jedem Spannelement eine Befestigung der Koppeleinheit in der Aufnahmeeinheit erfolgen. Insbesondere bewegen sich das Gegenspannelement und das Spannelement mit gleicher Geschwindigkeit und um die gleiche Wegstrecke. Weiterhin hat diese Anordnung den Vorteil, dass die Koppeleinheit im Wesentlichen zentral in die Aufnahmeeinheit eingesetzt werden kann und während des Befestigungsvorgangs und des Öffnungsvorgangs der Spannelemente im Wesentlichen in gleicher Position verbleibt.

Vorteilhafterweise erstreckt sich die Schraube durch die Aufnahmeeinrichtung, wobei die Schraube für das Spannelement und das Gegenspannelement Bereiche mit jeweils umgekehrter Steigung aufweist, mit denen das Spannelement und das Gegenspannelement jeweils in Eingriff sind. Somit kann durch die Verdrehung der Schraube in eine Richtung eine gegenläufige Bewegung des Spannelements und Gegenspannelements erzeugt werden. Dies vereinfacht den Befestigungsvorgang und den Öffnungsvorgang der Spannelemente bezüglich der Kopplungseinheit.

Vorteilhafterweise sind der Anschlag des Gegenspannelements und der Anschlag des Spannelements als zueinander parallele geradlinige Nuten ausgebildet, und die Schraube greift je nach Verdrehstellung in eine Vertiefung in der Koppeleinheit ein, um die Koppeleinheit bezüglich der Aufnahmeeinheit in der Erstreckungsrichtung der Nuten festzulegen. Eine solche Festlegung ist mit den Nuten aufgrund ihrer geradlinigen und zueinander parallelen Form nicht möglich. Insbesondere ist die Vertiefung der Koppeleinheit auf einer Erhebung auf der Koppeleinheit vorgesehen. Die Erhebung auf der Koppeleinheit kann insbesondere das komplementäre Formelement der Koppeleinheit sein, das in ein entsprechendes komplementäres Formelement der Aufnahmeeinheit, zum Beispiel eine Nut, eingesetzt wird, wodurch insbesondere sichergestellt werden kann, dass die Koppeleinheit in nur einer Orientierung in die Aufnahmeeinheit eingesetzt werden kann.

In einer anderen Ausführungsform ist das Spannelement so ausgelegt, dass die Koppeleinheit mittels magnetischer Kraft gehalten wird. Wiederum wird die Koppeleinheit vornehmlich durch den mit dem Hinterschnitt versehenen Anschlag gehalten. Damit die Koppeleinheit nicht aus dem Anschlag herausrutschen kann, wird eine magnetische Kraft auf die Koppeleinheit aufgebracht, die bevorzugterweise in Hochrichtung wirkt, und die verhindert, dass die Koppeleinheit aus dem Hinterschnitt der Aufnahmeeinheit herausrutscht. Zudem übernimmt die magnetische Kraft auch noch eine Haltewirkung in Hochrichtung in den Bereichen der Koppeleinheit, die von dem ersten Abschnitt der Koppeleinheit beabstandet sind.

In einer Ausführungsform ist eine Anschlagswand in der Aufnahmeeinheit vorgesehen, die gegenüberliegend zu dem mit dem Hinterschnitt versehenen Anschlag angeordnet ist. Die Anschlagswand der Aufnahmeeinheit verhindert ein Verrutschen der Koppeleinheit in Querrichtung, während das Spannelement mittels magnetischer Kraft ein Herausdrehen der Koppeleinheit in Hochrichtung verhindert.

Vorteilhafterweise ist das Spannelement betätigbar, so dass die magnetische Kraft ein- und ausgeschalten werden kann.

In einer Ausführungsform ist die Aufnahmeeinheit mit einem Elektromagneten versehen, der ausgelegt ist, die magnetische Kraft auf die Koppeleinheit aufzubringen.

In einer anderen Ausführungsform ist die Aufnahmeeinheit mit einem schaltbaren Permanentmagnet versehen, der ausgelegt ist, die magnetische Kraft auf die Koppeleinheit aufzubringen. Hierbei handelt es sich insbesondere um einen verdrehbaren Permanentmagneten, der je nach Drehstellung eine magnetische Kraft bereitstellt, die die Koppeleinheit sicher auf der Aufnahmeeinheit hält, oder ein Lösen der Koppeleinheit von der Aufnahmeeinheit ermöglicht. Ein Beispiel für einen derartigen verdrehbaren Permanentmagneten findet sich in der EP 114 259 A1.

Vorteilhafterweise ist der Elektromagnet oder der schaltbare Permanentmagnet in der Grundplatte der Aufnahmeeinheit angeordnet, oder auf der Seite der Grundplatte, die der Koppeleinheit abgewandt ist.

Die Koppeleinheit weist entweder einen Permanentmagnet auf, der mit dem Elektromagnet oder dem schaltbaren Permanentmagnet der Aufnahmeeinheit zusammenwirkt, oder sie ist zumindest bereichsweise oder insgesamt aus ferromagnetischem Material ausgebildet, das das Ausbilden einer magnetischen Kraft zwischen der Aufnahmeeinheit und der Koppeleinheit ermöglicht.

In einer Ausführungsform weist die Aufnahmeeinheit einen Rastbolzen auf, der an die Koppeleinheit eingreift, um zu verhindern, dass sich der erste Abschnitt der Koppeleinheit aus dem Anschlag löst, wenn die magnetische Haltekraft ausgeschaltet wird. Ein derartiger Rastbolzen ist lediglich eine Zusatzsicherung, die normalerweise nicht im Eingriff mit der Koppeleinheit steht und lediglich die Koppeleinheit hält, wenn die magnetische Kraft nicht vorhanden ist. Dies kann entweder beim Wechseln des Greifers oder bei einem fehlerhaften Betriebszustand der Fall sein.

Insbesondere ist der Rastbolzen in Richtung der Koppeleinheit vorgespannt, die eine Vertiefung aufweist, in die der Rastbolzen eingreift. Die Koppeleinheit kann mit einer Schräge versehen sein, so dass der Rastbolzen beim Einsetzen der Koppeleinheit in die Aufnahmeeinheit automatisch zurückgedrückt wird, bevor er in die Vertiefung der Koppeleinheit einschnappt. Die Vertiefung der Koppeleinheit ist vornehmlich gegenüber des ersten Abschnitts angeordnet.

Für die Entnahme der Koppeleinheit aus der Aufnahmeeinheit muss der Rastbolzen insbesondere gegen eine Federwirkung zurückgezogen werden.

Alternativ zum Rastbolzen kann auch eine Sicherungsschraube verwendet werden.

In einer weiteren Ausführungsform werden die Koppeleinheit und die Aufnahmeeinheit durch Formschluss und/oder Kraftschluss durch ein verdrehbares Element und ein komplementäres Aufnahmeelement aneinander befestigt.

Hierzu weist die Aufnahmeeinheit eine Ausnehmung auf, in die eine an der Koppeleinheit angeordnete Befestigungserhebung einführbar ist. Die Befestigungserhebung weist einen Ausschnitt auf. In diesen Ausschnitt greift ein Steg eines drehbaren Bolzens ein. Der Bolzen ist insbesondere in zwei Lagern an der Aufnahmeeinheit gelagert, wobei der Steg zwischen den Lagern angeordnet ist.

Der Steg hat einen Querschnitt, der von der Form eines Kreises abweicht.

Zur Verbindung der Koppeleinheit mit der Aufnahmeeinheit wird der Bolzen zunächst so gedreht, dass der Querschnitt des Steges in Richtung auf die Koppeleinheit insbesondere seine größte Erstreckung und quer dazu eine geringere aufweist. Der Ausschnitt der Befestigungserhebung ist so gestaltet, dass der Steg eingeführt werden kann. Nach Einführen des Steges in den Ausschnitt wird der Bolzen so gedreht, dass der Steg mit dem Ausschnitt verspannt wird und/oder den Ausschnitt zumindest bereichsweise hintergreift.

In vorteilhafter Weise ist an einem Ende des Bolzens ein Bügel gelenkig angeordnet. Der Bügel liegt an der Außenkontur der Aufnahmeeinheit an. Zum Drehen des Bolzens wird der Bügel von der Außenkontur weggeschwenkt und gedreht, so dass die Verbindung der Aufnahmeeinheit mit der Koppeleinheit gelöst wird. Zum Festlegen der Koppeleinheit an der Aufnahmeeinheit wird der Bolzen entsprechend in die andere Richtung gedreht und anschließend an die Außenkontur geklappt und dort vorzugsweise gesichert.

Der Querschnitt des Steges wird in vorteilhafter Weise als Kreis mit einem von ihm ausgesparten Kreissegment ausgebildet. Zum Befestigen oder Lösen wird der Bolzen und damit der Steg gedreht, wobei sich insbesondere eine Drehung um 180° als günstig erwiesen hat.

Als vorteilhaft hat sich auch ein Querschnitt des Steges erwiesen, der einem Halbkreis entspricht.

In vorteilhafter Weise kann der Steg auch einen Querschnitt aufweisen, der einem Kreis mit zwei ausgesparten, gegenüberliegenden Kreisabschnitten entspricht. In diesem Falle genügt zur Befestigung oder Lösung der Koppeleinheit von der Aufnahmeeinheit eine Drehung des Bolzens um etwa 90°.

In einer weiteren Ausgestaltung kann es sich als günstig erweisen, den Bolzen in drei beabstandeten Lagern drehbar zu lagern, so dass zwischen den Lagern zwei Stege vorgesehen werden können, die in zwei Ausschnitten von zwei Befestigungserhebungen der Koppeleinheit eingreifen können.

In einer weiteren Ausführungsform werden die Aufnahmeeinheit und die Koppeleinheit mit einer Überwurfmutter miteinander verschraubt.

Um die korrekte Zuordnung der Lage der Koppeleinheit in Bezug auf die Aufnahmeeinheit sicher zu stellen, weist die Aufnahmeeinheit Erhebungen auf, die mit entsprechenden Einkerbungen der Koppeleinheit korrespondieren.

Auch kann es günstig sein, zusätzlich zu den Erhebungen und Einkerbungen einen Justierbolzen vorzusehen.

Nach korrekter Zuordnung der Koppeleinheit in Bezug auf die Aufnahmeeinheit werden beide mit einer Überwurfmutter verschraubt, wobei bevorzugt die Überwurfmutter an der Aufnahmeeinheit und das dazugehörige Gewinde an der Koppeleinheit vorgesehen sind.

Um die Überwurfmutter bevorzugt ohne Werkzeug anziehen und lösen zu können ist nur ein geringes Anzugsmoment vorgesehen. Um trotzdem die erforderliche Klemmkraft zwisehen Überwurfmutter und Gewinde herzustellen, wird die Koppeleinheit gegenüber der Aufnahmeeinheit mit einem mit Druckluft beaufschlagbaren Druckbolzen verspannt.

Der Druckbolzen mit der dazugehörigen Druckluftkammer sowie dem Druckluftanschluss sind vorzugsweise in der Aufnahmeeinheit angeordnet.

Bei Beaufschlagen der Druckluftkammer mit Luft wird der Druckluftbolzen von der Aufnahmeeinheit weg in Richtung Koppeleinheit bewegt. Die so auf die Koppeleinheit einwirkende Kraft bewirkt in der Überwurfmutter die entsprechend gewünschte Erhöhung der Klemmkraft.

Um die Überwurfmutter lösen zu können, genügt es, die Druckluftkammer drucklos zu stellen, so dass der Druckbolzen nicht mehr auf die Koppeleinheit drückt, so dass sich im Ergebnis die Klemmkraft der Überwurfmutter entsprechend verringert.

Auch ist es möglich, die Druckluftzufuhr mit der Druckluftkammer und dem Druckluftbolzen in der Koppeleinheit anzuordnen, so dass der Druckluftbolzen auf die Aufnahmeeinheit einwirkt.

In manchen Ausführungsformen kann die Überwurfmutter an der Koppeleinheit angeordnet werden, und mit der Aufnahmeeinheit verschraubt werden.

Die Greifer sind insbesondere zum Aufnehmen und Ablegen von Produkten ausgelegt, insbesondere von Lebensmittelprodukten. Die Lebensmittelprodukte sind vornehmlich Lebensmittelscheiben, die von einem Lebensmittellaib abgeschnitten wurden. Solche Scheiben sind zum Beispiel Wurstscheiben, Käsescheiben oder Schinkenscheiben.

Der Greifer und/oder der Roboter sind mit einer Steuer- und Regeleinheit versehen, die eine genaue Bewegung des Roboters und der beweglichen Greiferteile ermöglicht.

Die erfindungsgemäße Befestigungsvorrichtung kann integrierte Schnittstellen zur Datenübertragung und/oder Leistungsversorgung aufweisen, sodass der Greifer geregelt angesteuert und angetrieben werden kann. Die Leistungsversorgung kann insbesondere in Form von Druckluft oder Elektrizität erfolgen.

Die Steuer- und Regeleinheit ist vorteilhafterweise digital, das heißt, eine mit Software versehene Computersteuerung.

Der Roboter und die Greifer werden vorteilhafterweise dadurch gesteuert, dass Informationen über die Positionen der Produkte bereitgestellt werden, die von der Steuer- und Regeleinheit verarbeitet werden. Diese Informationen werden entweder von vorhergehenden Systemen, wie zum Beispiel einer Schneidemaschine an die Steuer- und Regeleinheit weitergegeben, oder sensorisch erfasst.

Weiterhin kann Information über die Größe und/oder Ausrichtung der Produkte, die mit dem Greifer ergriffen werden sollen, bereitgestellt und verarbeitet werden.

Beispielsweise ist es vorstellbar, dass ein Kamerasystem die Position und/oder Größe der Produkte ermittelt. Das Kamerasystem kann entweder stationär vorgesehen sein, oder in den Roboter oder Greifer integriert sein.

Vornehmlich befindet sich der Roboter in einer Roboterzelle, die ein Gestell zur Befestigung des Roboters bereitstellt. Die Roboterzelle kann weiterhin Schutzwände aufweisen, die die Operation des Roboters sicherer gestalten. Die Schutzwände umfassen insbesondere einen Zugang zum Roboter, der geöffnet und geschlossen werden kann. Ein Sensor am Zugang kann mit der Steuer- und Regeleinheit verbunden sein kann, und einen geöffneten Zustand oder geschlossenen Zustand melden, sodass im geöffneten Zustand der Roboter angehalten wird. Weiterhin können die Schutzwände wenigstens teilweise durchsichtig sein.

Der Roboter weist mindestens einen Antriebsmotor, insbesondere mit Getriebe, auf.

Vornehmlich weist der Roboter Roboterarme auf, die parallel und/oder sequentiell angeordnet sein können. Insbesondere hat jeder Roboterarm mindestens einen Antriebsmotor, der vornehmlich über ein Getriebe den Roboterarm antreibt.

Die Antriebe der Roboterarme werden von der Steuer- und Regeleinheit gesteuert.

Weiterhin weist der Roboterarm insbesondere Aufnahmen für den Antriebsmotor und für die Getriebe auf, damit diese befestigt werden können.

Der Roboterarm besteht aus wenigstens einem Oberarm und einem Unterarm, wobei der Oberarm vornehmlich gelenkig mit dem Unterarm verbunden ist.

Weiterhin wird insbesondere ein virtuelles Koordinatensystem berechnet, in dem die Anordnung des Roboters und des Greifers, sowie der Produkte, bestimmt werden, so dass eine optimale Positionierung und Bewegung des Roboters und Greifers möglich ist.

Im Folgenden werden vorteilhafte Ausführungsformen der Erfindung mit Bezug auf die Figuren beschrieben. Es zeigen:
- Figur 1: die generelle Anordnung einer gattungsgemäßen Befestigungsvorrichtung für einen Greifer an einem Delta-Roboter.
- Figur 2: eine Aufnahmeeinheit einer ersten Ausführungsform der erfindungsgemäßen Befestigungsvorrichtung.
- Figur 3: eine Koppeleinheit, die in die Aufnahmeeinheit der ersten Ausführungsform der erfindungsgemäßen Befestigungsvorrichtung eingesetzt ist.
- Figur 4: eine perspektivische Schnittansicht der ersten Ausführungsform der erfindungsgemäßen Befestigungsvorrichtung.
- Figur 5: eine ebene Schnittansicht einer zweiten Ausführungsform der erfindungsgemäßen Befestigungsvorrichtung.
- Figur 6: eine Schnittansicht einer dritten Ausführungsform der erfindungsgemäßen Befestigungsvorrichtung.
- Figur 7: eine perspektivische Explosionszeichnung der dritten Ausführungsform der erfindungsgemäßen Befestigungsvorrichtung.
- Figur 8: eine ebene Schnittansicht einer vierten Ausführungsform der erfindungsgemäßen Befestigungsvorrichtung.
- Figur 9: eine perspektivische Ansicht der Koppeleinheit aus Figur 8 mit eingesetztem Bolzen.
- Figur 10: eine perspektivische Ansicht eines Teils der Koppeleinheit aus Figur 8.
- Figur 11: eine schematische Schnittansicht der Koppeleinheit und Aufnahmeeinheit im zusammengesetzten Zustand.
- Figuren 12, 12.1, 12.2, 12.3: den Bolzen mit dem Steg.
- Figur 13: eine schematische Schnittansicht einer fünften Ausführungsform der erfindungsgemäßen Befestigungsvorrichtung.
- Figur 14: eine schematische Schnittansicht einer Abwandlung der fünften Ausführungsform mit einem Justierbolzen.

Anhand von Figur 1 wird nochmals die Anordnung der erfindungsgemäßen Befestigungsvorrichtung 10 erläutert, die entsprechend der konventionellen Befestigungsvorrichtung 1 zwischen einem Greifer 2 und einem Delta-Roboter 3 angeordnet ist. Der Greifer 2 weist zwei zueinander verschiebliche Aufnahmeelemente 7 auf, die dazu verwendet werden können, Lebensmittelprodukte oder Stapel von Lebensmittelprodukten aufzunehmen und zu transportieren. Beispiele für derartige Lebensmittelprodukte sind beispielsweise aufgeschnittene Scheiben von Wurst, Käse oder Schinken. Der Greifer 2 ist mittels der Befestigungsvorrichtung 1 an einem durch Roboterarme 8 beweglichen Element 9 des Delta-Roboters 3 befestigt. Das stationäre Element des Delta-Roboters 3 ist in der Zeichnung nicht wiedergegeben, da jeweils nur der Endabschnitt der Roboterarme 8 dargestellt ist.

Eine erste Ausführungsform einer erfindungsgemäßen Befestigungsvorrichtung 10 wird nun anhand der Figuren 2 bis 4 erläutert. In Figur 2 ist die Aufnahmeeinheit 11 dargestellt, die an dem beweglichen Element 9 des Delta-Roboters 3 befestigt ist. Die Aufnahmeeinheit 11 umfasst eine Grundplatte 12, auf der eine Erhebung 13 vorgesehen ist. Die Erhebung 13 erstreckt sich vornehmlich in Querrichtung Q und weist konisch zulaufende Seitenwände auf. Die Erhebung 13 ist entweder abgeflacht oder spitz zulaufend ausgestaltet. Die Grundplatte 12 wird an einer Seite durch eine Seitenwand 14 begrenzt, die sich ebenfalls grundsätzlich in Querrichtung Q erstreckt, aber eine leicht abgerundete Form aufweist. Die Seitenwand 14 geht an ihrem oberen Ende in Höhenrichtung H in die Grundplatte 12 über.

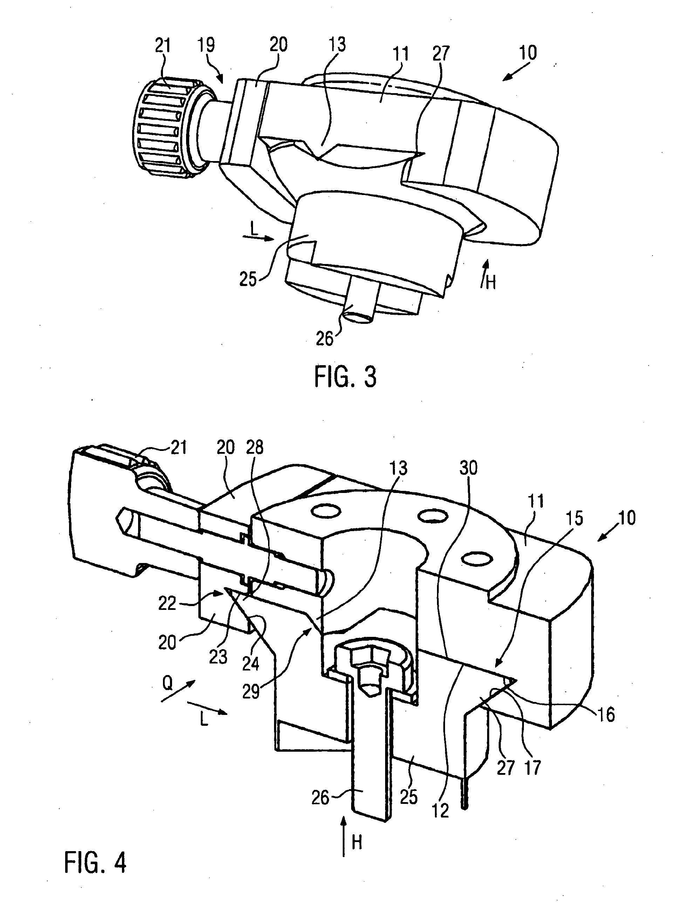

An der Schnittstelle zwischen Seitenwand 14 und Grundplatte 12 ist ein Anschlag 15 vorgesehen, der durch die Seitenflächen 16, 17 (siehe Figur 4) der Nut gebildet wird. Die Seitenfläche 16 ist im Wesentlichen eine Fortsetzung der Grundplatte 12. Alternativ kann die Seitenfläche 16 aber auch keine stetige Fortsetzung der Grundplatte 12 sein, sondern eine davon abgesetzte Fläche. Die Seitenfläche 17 ist in einem spitzen Winkel zur Seitenfläche 16 angeordnet, so dass die Seitenflächen 16, 17 zueinander konisch verlaufen.

Auf der gegenüberliegenden Seite der Grundplatte 12 in Längsrichtung L ist das Spannelement 18 angeordnet. Das Spannelement 18 weist eine Schraube 19 auf, die eine Spannplatte 20 in Längsrichtung L festlegen und/oder vorspannen kann. Die Spannschraube 19 weist insbesondere einen Handgriff 21 auf, so dass sie ohne den Einsatz von Schraubwerkzeug festgezogen und gelockert werden kann.

In der Spannplatte 20 ist ebenfalls ein Anschlag 22 in Form einer Nut ausgebildet, so dass auch der Anschlag 22 einen Hinterschnitt aufweist. Die Nut des Anschlags 22 wird gebildet durch eine Seitenfläche 23, die im Wesentlichen auf Höhe der Grundplatte 12 angeordnet ist. In anderen Ausführungsbeispielen kann die Seitenfläche 23 in der Höhenrichtung H von der Grundplatte 12 abgesetzt sein kann. Weiterhin weist der Anschlag 22 eine Seitenfläche 24 auf, die in einem spitzen Winkel zur Seitenfläche 23 angeordnet ist. Damit verlaufen die Seitenflächen 23 und 24 konisch zueinander. Wird die Spannschraube 19 mittels des Handgriffs 21 um ihre Schraubenachse gedreht, so wird die Spannplatte 20 in Längsrichtung L entweder gelockert oder vorgespannt, oder in Längsrichtung L verschoben.

In Figur 3 ist die Koppeleinheit 25 in eingesetztem Zustand in die Aufnahmeeinheit 11 dargestellt. An der Koppeleinheit 25 ist ein Greifer 2 befestigt, der in Figur 3 aus Gründen der Übersichtlichkeit nicht wiedergegeben wurde. Der Greifer 2 kann insbesondere mittels der Schraube 26, die in einer zentralen Ausnehmung in der Koppeleinheit 25 angeordnet ist, befestigt werden.

Wie in Figur 3 und Figur 4 gesehen werden kann, untergreift ein erster Abschnitt 27 der Koppeleinheit 25 den Anschlag 15 der Aufnahmeeinheit 11, so dass er darin durch einen Hinterschnitt gehalten wird. Auf der gegenüberliegenden Seite hintergreift ein zweiter Abschnitt 28 der Koppeleinheit 25 den Anschlag 22 der Spannplatte 20. Somit wird auch der zweite Abschnitt 28 festgelegt, und die Koppeleinheit 25 insgesamt gegen Verrutschen gesichert.

In Figur 4 ist eine Schnittansicht in perspektivischer Darstellung wiedergegeben, in der der Eingriff der ersten und zweiten Abschnitte 27, 28 in die Anschläge 15, 22 dargestellt ist. Weiterhin kann in der Schnittansicht auch die Erhebung 13 der Aufnahmeeinheit 11 gesehen werden, und ihr Eingriff in eine entsprechende Ausnehmung 29 der Koppeleinheit 25. In anderen Ausführungsbeispielen kann die Ausnehmung auch in der Aufnahmeeinheit 11 vorgesehen sein, während die Erhebung 13 in der Koppeleinheit 25 vorgesehen sein kann.

In Figur 2 und in Figur 3 kann gesehen werden, dass der Anschlag 15 in Querrichtung eine in seinem mittleren Bereich zurückgesetzte Form aufweist, das heißt, dass ein erster Abschnitt 27 der Koppeleinheit 25 im mittleren Bereich weiter in Längsrichtung L in die Seitenwand 14 vorstehen kann, als in den Seitenbereichen. Dadurch wird eine Fixierung der Koppeleinheit 25 in Querrichtung bezüglich der Aufnahmeeinheit 11 erreicht.

Im Folgenden wird der Befestigungsvorgang des Greifers 2 am Roboter 3 und der Vorgang des Lösens des Greifer 2 von dem Roboter 3 beschrieben.

Zunächst befindet sich die Aufnahmeeinheit 11 in dem in Figur 2 dargestellten Zustand, in dem der Greifer 2 mit der Koppeleinheit 25 noch nicht in die Aufnahmeeinheit 11 des Roboters 3 eingesetzt wurde. Zunächst wird die Spannschraube 19 mittels einer Drehung am Handgriff 21 gelockert, so dass die Spannplatte 20 in Richtung des Handgriffs 21 zurückgezogen werden kann, und somit den der Spannplatte 20 zugeordneten Seitenbereich der Grundplatte 12 freigibt.

Dann wird von unten in Hochrichtung die Koppeleinheit 25 der Aufnahmeeinheit 11 angenähert. Alternativ dazu kann auch die Koppeleinheit 25 zusammen mit dem Greifer feststehen, und die Aufnahmeeinheit 11 auf die Koppeleinheit 25 herabgesenkt werden.

Die Aufnahmeeinheit 11 und die Koppeleinheit 25 werden so zueinander angeordnet, dass der erste Abschnitt 27 der Koppeleinheit 25 zumindest teilweise in den Anschlag 15 eingesetzt ist, während die Grundplatte 30 der Koppeleinheit 25 in einem Winkel zur Grundplatte 12 der Aufnahmeeinheit 11 steht, so dass der zweite Abschnitt 28 noch unter der Spannplatte 20 in Höhenrichtung H angeordnet ist. Dann wird der zweite Abschnitt 28 ebenfalls angehoben, bis er auf Höhe des Anschlags 22 ist. Bei dieser Bewegung reduziert sich der Abstand zwischen den Grundplatten 12 und 30 und die Erhebung 13 fügt sich in die Ausnehmung 29, wenn die Aufnahmeeinheit 11 und die Koppeleinheit 25 in der richtigen Orientierung zueinander sind. Sollte die Koppeleinheit 25 bezüglich der Aufnahmeeinheit falsch orientiert sein, beispielsweise da der zweite Abschnitt 28 in den Anschlag 15 eingelegt wurde, ist ein Absenken der Grundplatten 12, 30 aufeinander wegen der Erhebung 13 und der Ausnehmung 29 nicht möglich. Dies wird dadurch erreicht, dass die Ausnehmung 29 und die Erhebung 13 dezentral zwischen dem ersten Abschnitt 27 und dem zweiten Abschnitt 28 der Koppeleinheit 25 angeordnet sind.

Wenn die Grundplatte 12 und die Grundplatte 30 aufeinander angeordnet oder einander maximal angenähert sind, wird die Spannschraube 19 durch Drehung am Handgriff 21 angezogen, so dass Spannplatte 20 so verschoben wird, dass sie mit ihrem Anschlag 22 den zweiten Abschnitt 28 der Koppeleinheit 25 aufnimmt. Wenn der zweite Abschnitt 28 in Anlage mit den Seitenflächen 23, 24 der Spannplatte 20 ist, besteht immer noch ein kleiner Spalt zwischen der Spannplatte 20 und der ihr gegenüberliegenden Wand der Aufnahmeeinheit 11. Dadurch kann durch weiteres Drehen der Spannschraube 19 die Vorspannung, die durch die Anschläge 15, 22 auf den ersten und zweiten Abschnitt 27, 28 der Koppeleinheit 25 aufgebracht wird, genau eingestellt werden.

Beim Lösen der Koppeleinheit 25 wird genau entgegengesetzt vorgegangen. Zunächst wird die Spannschraube 19 durch Drehen am Handgriff 21 gelöst, und daraufhin die Spannplatte 20 so verschoben, dass der zweite Abschnitt 28 der Koppeleinheit 25 freigegeben wird. Dann wird zunächst der zweite Abschnitt 28 bezüglich der Aufnahmeeinheit abgesenkt, bis die Koppeleinheit so in Längsrichtung bewegt werden kann, dass auch der erste Abschnitt 27 aus dem Anschlag 15 entnommen werden kann.

Es wird nochmals klargestellt, dass es sowohl beim Befestigen als auch beim Lösen des Greifers möglich ist, entweder die Aufnahmeeinheit 11 bezüglich der ortsfesten Koppeleinheit 25, die Koppeleinheit 25 bezüglich der ortsfesten Aufnahmeeinheit 11, oder beide Elemente gleichzeitig bezüglich einander zu bewegen.

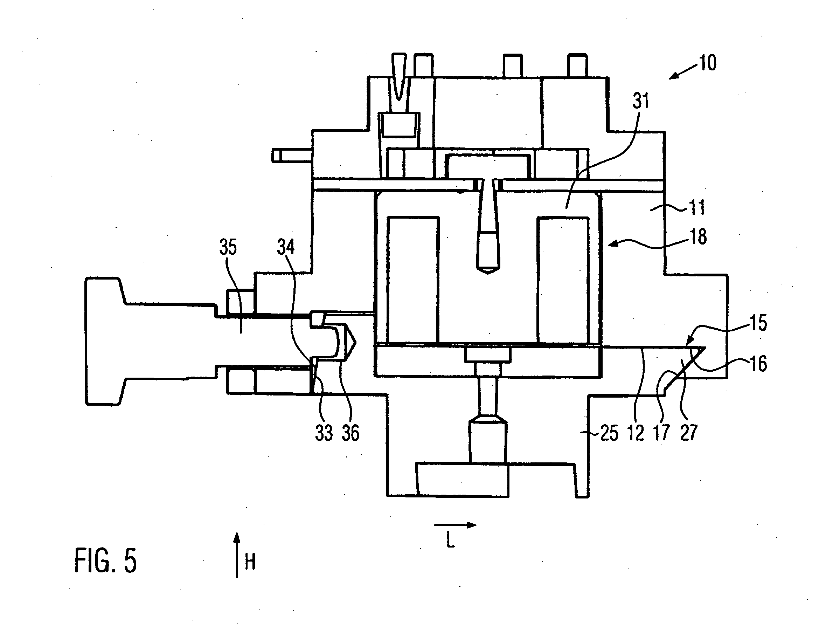

In Figur 5 ist eine weitere Ausführungsform der erfindungsgemäßen Befestigungsvorrichtung 10 dargestellt. Gleiche Teile werden durch gleiche Bezugszeichen wie in der ersten Ausführungsform angegeben, wobei im Folgenden vornehmlich auf die Unterschiede zwischen den Ausführungsformen eingegangen wird. Die Befestigungsvorrichtung 10 weist wiederum eine Aufnahmeeinheit 11 auf, in die eine Koppeleinheit 25 eingesetzt werden kann, wobei dafür an einer Seite der erste Abschnitt 27 der Koppeleinheit 25 in den Anschlag 25 der Aufnahmeeinheit 11 eingesetzt werden kann, so dass er darin durch einen Hinterschnitt festgelegt ist. Der wesentliche Unterschied zwischen den Ausführungsformen liegt in der Ausgestaltung des Spannelements 18. Das Spannelement 18 weist einen Elektromagneten 31 auf, der in der Aufnahmeeinheit 11 angeordnet ist, und der einen Teil der Grundplatte 12 bildet. Dem gegenüberliegend ist ein Permanentmagnet in der Koppeleinheit 25 vorgesehen, der einen Teil der Grundplatte 12 der Koppeleinheit 25 bildet. Der Permanentmagnet ist insbesondere mittels einer Schraube an der Koppeleinheit 25 befestigt. Alternativ dazu kann die Koppeleinheit auch lediglich mit einem Einsatz aus ferromagnetischem Material versehen sein, oder kann insgesamt aus ferromagnetischem Material gebildet sein.

Wenn der Elektromagnet 31 mit Strom versorgt wird, bildet er ein magnetisches Feld aus, das eine anziehende Kraft auf den Permanentmagnet in der Hochrichtung H auswirkt und somit verhindert, dass die Koppeleinheit 25 sich aus der Aufnahmeeinheit 11 löst. Dabei wird aber nach wie vor eine wesentliche Kraft in Hochrichtung H durch den Eingriff des ersten Abschnitts 27 in den Hinterschnitt des Anschlags 15 übernommen, so dass die Koppeleinheit 25 sicher in der Aufnahmeeinheit 11 befestigt ist. Am gegenüberliegenden Ende der Aufnahmeeinheit ausgehend vom Anschlag 15 ist eine Seitenwand 33 ausgebildet, die im Kontakt mit zumindest einem Bereich oder einer Kante der Seitenwand 34 der Koppeleinheit 25 kommen kann. Die Seitenwand 33 verhindert, dass eine Bewegung der Koppeleinheit 25 in Längsrichtung L bezüglich der Aufnahmeeinheit 11 stattfinden kann, die dazu führen könnte, dass der erste Abschnitt 27 aus dem Anschlag 15 herausrutscht.

Die Seitenwand 33 der Koppeleinheit 25 wird von einem Rastbolzen 35 durchdrungen, der in einer Ausnehmung 36 der Koppeleinheit 25 eingreifen kann. Die Ausnehmung 36 ist in der Koppeleinheit 25 auf der gegenüberliegenden Seite bezüglich des ersten Abschnitts 27 angeordnet. Insbesondere ist der Rastbolzen 35 mit einer Federkraft in Richtung der Ausnehmung 36 vorbelastet. Wenn nun gewollt oder ungewollt die magnetische Kraft des Elektromagneten 31 nicht mehr vorliegt, verhindert der Rastbolzen 35, dass der Greifer 2 mitsamt der Koppeleinheit 25 aus der Aufnahmeeinheit 11 fallen kann. Wenn der Greifer 2 gewechselt werden soll, muss lediglich am Rastbolzen 35 gezogen werden, so dass dieser aus der Ausnehmung 36 ausrückt, wodurch der Greifer 2 nach unten entnommen werden kann.

Insbesondere weist die Seitenwand 34 der Koppeleinheit 25 eine Schräge in Hochrichtung auf, die es ermöglicht, dass die Koppeleinheit 25 in gekippter Stellung bezüglich der Aufnahmeeinheit 11 in die Aufnahmeeinheit 11 eingesetzt werden kann. Weiterhin kann die Schräge der Seitenwand 34 so ausgestaltet sein, dass sie automatisch mit dem Rastbolzen 35 so zusammenwirkt, so dass dieser beim Einsetzen der Koppeleinheit 25 automatisch zurückgedrängt wird, und kein zusätzlicher Handgriff zum Zurückziehen des Rastbolzens 35 mehr notwendig ist.

Der Elektromagnet 31 kann automatisch betätigt werden, wenn der Delta-Roboter in Betrieb genommen wird, und deswegen mit Strom versorgt wird. Im deaktivierten Zustand ist es meist nicht notwendig, den Elektromagneten 31 zu aktivieren, da der Rastbolzen 35 zumindest im stationären Zustand eine genügend hohe Haltekraft aufbringt, um die Koppeleinheit 25 in der Aufnahmeeinheit 11 zu halten.

Mit dem Einsetzen der Koppeleinheit 11 in die Aufnahmeeinheit 25 muss eine Montagekraft zur Verfügung gestellt werden, die dazu dient, den Greifer 2 am Roboterarm zu halten. Diese Montagekraft kann durch den zuvor beschriebenen Rastbolzen 25 oder aber durch eine zusätzliche magnetische Verbindung mittels eines weiteren Permanentmagneten erfolgen. Bevor der Roboter 3 in Betrieb genommen wird muss die Sicherheitstür der Roboterzelle geschlossen werden. Dieses Schließen der Tür wird als Signal zum Schalten des Elektromagneten 31 genommen. Der Elektromagnet 31 stellt dann bei geschlossener Sicherheitstür die für den Betrieb des Roboters erforderliche Kraft zum Halten des Greifers 2 zur Verfügung.

Der Einsetzvorgang der Koppeleinheit 25 in die Aufnahmeeinheit 11 entspricht dem der ersten Ausführungsform, nur dass anstelle des Festziehens der Spannplatte 20 der Elektromagnet 31 angeschaltet wird, beziehungsweise der Rastbolzen 35 in Eingriff mit der Ausnehmung 36 gebracht wird.

Es wird darauf hingewiesen, dass eine mögliche Abänderung des zweiten Ausführungsbeispiels ist, keine Magneten vorzusehen, sondern als Spannelement ausschließlich den Rastbolzen 35, der in die Ausnehmung 36 eingreift, vorzusehen. Dafür ist der Rastbolzen 35 geeignet auszugestalten, so dass ein sicherer und möglichst spielfreier Sitz der derart ausgestalteten Koppeleinheit 25 in der Aufnahmeeinheit 11 erreicht wird.

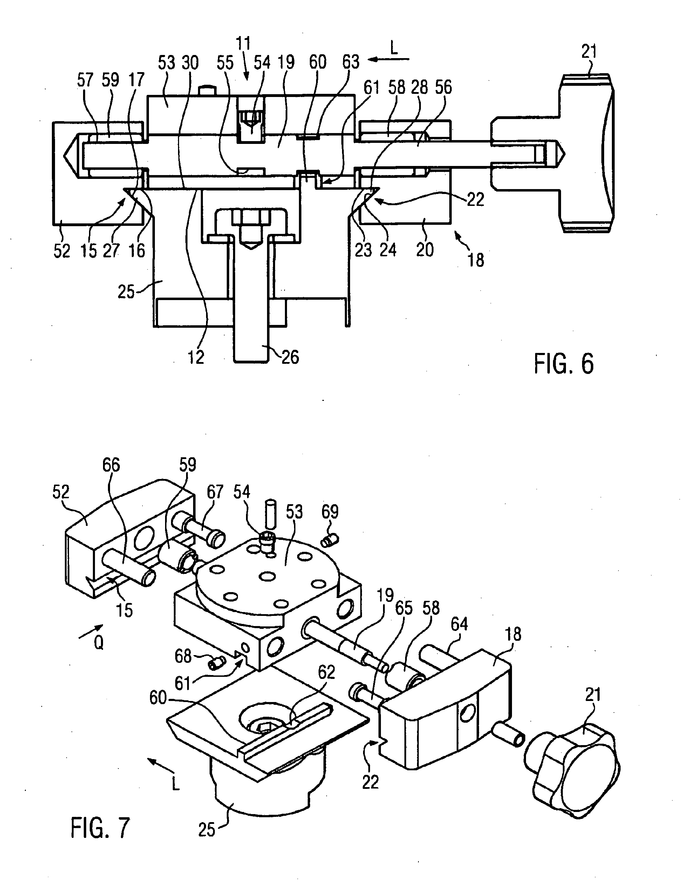

In Figur 6 ist eine dritte Ausführungsform der Erfindung in einer Schnittansicht dargestellt. Die dritte Ausführungsform weist viele Gemeinsamkeiten mit der ersten Ausführungsform auf, weswegen gleiche Teile mit gleichen Bezugszeichen bezeichnet werden, und auf die entsprechenden Ausführungen zur ersten Ausführungsform verwiesen wird. Im Folgenden werden vor allem die Unterschiede der dritten Ausführungsform bezüglich der ersten Ausführungsform erläutert.

In der dritten Ausführungsform umfasst die Aufnahmeeinheit 11 nicht nur ein Spannelement 18, sondern auch ein Gegenspannelement 52, was ebenso vornehmlich als Spannplatte ausgebildet sein kann. Das Spannelement 18 und das Gegenspannelement 52 sind an gegenüberliegenden Seiten eines Zentralelements 53 an der Aufnahmeeinheit 11 angeordnet. Insbesondere sind das Spannelement 18 und das Gegenspannelement 52 an gegenüberliegenden Seiten der Grundplatte 12 der Aufnahmeeinheit 11 angeordnet. Die Schraube 19 erstreckt sich vollends durch das Zentralelement 53, wobei die Schraube 19 vornehmlich in einer Bohrung durch das Zentralelement 53 aufgenommen ist und in dieser gleitgelagert ist. Um eine axiale Verschiebung der Schraube 19 im Zentralelement 53 zu vermeiden, ist eine Sicherungsschraube 54, oder ein beliebiges anderes vergleichbares vorstehendes Sicherungselement, vorgesehen, das sich in eine zentrale Ringnut 55 erstreckt, die um den gesamten Umfang der Schraube 19 ausgebildet ist.

Die Schraube 19 weist auf beiden Seiten außerhalb des Zentralelements 53 Gewindebereiche 56, 57 auf, die jeweils mit einem Gewinde mit gegensätzlicher Steigung versehen sind. Insbesondere ist einer der Gewindebereiche 56, 57 ein Linksgewinde, und der andere Gewindebereich 56, 57 ein Rechtsgewinde. Die Gewindebereiche 56, 57 sind jeweils im Eingriff mit den Spannelementen 18, 52. Dafür können in den Spannelementen 18, 52 Gewindeeinsätze 58, 59 vorgesehen sein, um die Stabilität der Vorrichtung zu erhöhen. Wird die Schraube 19 nun mittels des Handgriffs 21 verdreht, bewegen sich die Spannelemente 18, 52 in gegensätzlichen Richtungen entlang der Längsrichtung L und geben somit den ersten Abschnitt 27 und den zweiten Abschnitt 28 der Koppeleinheit frei oder legen diese in den jeweiligen Anschlägen 15, 22 fest. Die Anschläge 15, 22 sind insbesondere durch parallele, sich in Querrichtung erstreckenden Nuten in den jeweiligen Spannelementen 18, 52 ausgebildet.

Weiterhin ist auf der Grundplatte 30 der Koppeleinheit eine Erhebung 60 ausgebildet, die im eingesetzten Zustand der Koppeleinheit 25 in eine Ausnehmung 61 in der Grundplatte 12 des Zentralelements 53 der Aufnahmeeinheit 11 eingreift. Insbesondere sind die Erhebung 60 und die Ausnehmung 61 so ausgebildet, dass sie sich nicht über die gesamte Länge oder Breite der Koppeleinheit 25 erstrecken, sodass die Koppeleinheit 25 in nur einer Orientierung in die Aufnahmeeinheit 11 eingesetzt werden kann. Die Erhebung 60 und die Ausnehmung 61 haben eine vornehmlich entsprechende, komplementäre Form. In der Erhebung 60 ist auf Höhe der Schraube 19 eine Vertiefung 62 vorgesehen, in der sich die Schraube 19 drehen kann. Die Schraube 19 weist in Entsprechung zur Erhebung 60 eine Nut 63 auf, die sich allerdings nicht um den gesamten Umfang der Schraube 19 erstreckt. Wenn die Schraube 19 so verdreht wird, dass ihre Nut 63 im Bereich der Erhebung 60 angeordnet ist, kann die Koppeleinheit bei leicht gelockerten Spannelementen 18, 52 entgegen der Querrichtung Q durch Verschieben innerhalb der Nuten 15, 22 entnommen werden. Ist die Schraube 19 dagegen so angeordnet, dass sie in die Vertiefung 62 eingreift, ist dies nicht möglich.

Wie in der Explosionszeichnung in Figur 7 dargestellt ist, sind an jedem Spannelement 18, 52 sind jeweils zwei Bolzen 64, 65, beziehungsweise 66, 67 vorgesehen, die in entsprechende Ausnehmungen im Zentralelement 53 eingreifen, und so eine Verdrehung der Spannelemente 18, 52 beim Verdrehen der Schraube 19 verhindern. Um einen beidseitigen oder einseitigen Anschlag für die Verstellung der Spannelemente 18, 52 zu ermöglichen, kann jeweils einer der Bolzen 65, 67 bereichsweise einen geringeren Durchmesser aufweisen, in den Sicherungsschrauben 68, 69, die in das Zentralelement 53 eingeschraubt werden, eingreifen.

Somit stellt die dritte Ausführungsform eine vorteilhafte Möglichkeit dar, eine Koppeleinheit 25 an einer Aufnahmeeinheit 11 zu befestigen.

Die Erfindung stellt weiterhin eine Vorrichtung zum lösbaren Befestigen eines Greifers 2 an einem Roboter bereit, insbesondere an einem Deltaroboter 3, mit einer Aufnahmeeinheit 11 und einer Koppeleinheit 25, zwischen denen wenigstens ein form- und/oder kraftschlüssiges Verbindungsmittel vorgesehen ist, wobei die Aufnahmeeinheit 11 eine Ausnehmung 38 aufweist, in die eine Befestigungserhebung 39 der Koppeleinheit 25 einführbar ist, wobei in der Aufnahmeeinheit 11 ein Bolzen 41 drehbar angeordnet ist, wobei der Bolzen 41 einen Steg 42 aufweist, dessen Querschnitt von der Form eines Kreises abweicht, wobei die Befestigungserhebung 39 der Koppeleinheit 25 einen Ausschnitt 43 aufweist, in den der Steg 42 des Bolzens 41 einführbar ist, und wobei der Steg 42 des Bolzens 41 durch Drehen des Bolzens 41 in einem Hinterschnitt im Ausschnitt 43 anordbar ist.

Am Bolzen 41 kann ein Bügel 44 vorgesehen sein, mit dem der Bolzen 41 gedreht werden kann.

Der Bügel 44 kann gelenkig am Bolzen 41 befestigt sein und kann zum Drehen des Bolzens 44 von der Außenkontur der Aufnahmeeinheit 11 wegbewegt werden, wobei der Bolzen 41 an der Außenkontur der Aufnahmeeinheit 11 gesichert werden kann.

Der Querschnitt des Steges 42 kann als Kreis mit einem ausgesparten Kreissegment ausgebildet sein, und in den entsprechend geformten Ausschnitt 43 der Befestigungserhebung 39 der Koppeleinheit 25 eingreifen und zum Formschluss zwischen Steg 42 und Ausschnitt 43 um etwa 180° gedreht werden.

Der Steg 42 kann halbrund ausgeführt sein und in den entsprechend ausgebildeten Ausschnitt 43 eingreifen.

Der Querschnitt des Steges 42 kann als Kreis mit zwei gegenüber liegenden ausgesparten Kreissegmenten ausgebildet sein, und in den entsprechend ausgebildeten Ausschnitt 43 eingreift, so dass der Bolzen 41 zum Formschluss zwischen Steg 42 und Ausschnitt 43 um etwa 90° gedreht werden muss.

Der Bolzen 41 kann zwei Stege 42 aufweisen, wobei die Stege 42 in zwei Ausschnitten 43 von zwei Befestigungserhebungen 39 eingreifen.

Die Erfindung stellt weiterhin eine Vorrichtung zum lösbaren Befestigen eines Greifers 2 an einem Roboter, insbesondere einem Deltaroboter 3, bereit, mit einer Aufnahmeeinheit 11 und einer Koppeleinheit 25, zwischen denen wenigstens ein form- und/oder kraftschlüssiges Verbindungsmittel vorgesehen ist, wobei die Aufnahmeeinheit 11 mit der Koppeleinheit 25 vermittels einer an der Aufnahmeeinheit 11 angeordneten Überwurfmutter 45 und einem an der Koppeleinheit 25 vorgesehenen Gewinde verschraubbar festgelegt werden kann.

Insbesondere weist die Aufnahmeeinheit 11 Erhebungen 46 auf, die mit Einkerbungen 47 der Koppeleinheit 25 derart korrespondieren, dass die Koppeleinheit 25 nur in wenigstens einer festgelegten Orientierung mit der Aufnahmeeinheit 11 montiert werden kann.

Zur korrekten Zuordnung der Koppeleinheit 25 mit der Aufnahmeeinheit 11 kann ein Justierbolzen 48 vorgesehen sein, der von der Aufnahmeeinheit 11 und der Koppeleinheit 25 aufgenommen werden kann.

Im Aufnahmeteil 11 kann ein Druckbolzen 41 beweglich angeordnet sein, der mit Druckluft über einen Druckluftanschluß 50 und eine Druckluftkammer 51 beaufschlagbar ist, wobei der Druckbolzen 41 im Falle der Druckluftbeaufschlagung auf die Koppeleinheit 25 derart einwirkt, dass die Aufnahmeeinheit 11 gegenüber der Koppeleinheit 25 verspannt wird, so dass die Klemmkraft der Überwurfmutter 45 erhöht wird.

Insbesondere kann die Überwurfmutter 45 mit Hand ohne übermäßige Kraftanwendung angezogen werden, wobei die erforderliche Klemmkraft durch die Druckluftbeaufschlagung des Druckbolzens 41 erzeugt wird.

Die Vorrichtung ist insbesondere ausgelegt, dass nach Verbinden der Koppeleinheit 25 mit der Aufnahmeeinheit 11 die Überwurfmutter 45 angezogen wird und anschließend der Druckbolzen 41 mit Druckluft beaufschlagt wird, und dass zum Lösen der Koppeleinheit 25 von der Aufnahmeeinheit 11 zunächst der Druck vom Druckbolzen 49 genommen wird, bevor die Überwurfmutter 45 gelöst werden kann.

Der Druckluftanschluss 50, die Druckluftkammer 51 und der Druckbolzen 49 können in der Koppeleinheit 25 angeordnet sein.

Die Erfindung stellt weiterhin ein Verfahren zum lösbaren Befestigen eines Greifers 2 an einem Roboter, insbesondere einem Delta-Roboter 3, bereit, wobei eine Koppeleinheit 25 und eine Aufnahmeeinheit 11 vorgesehen sind, umfassend die folgenden Schritte:
Lösen eines Bügels 44 und Drehen eines Bolzens 41, so dass ein Steg 42 in eine Aufnahmeposition gelangt, Einführen einer Befestigungserhebung 39 der Koppeleinheit 25 in die Aufnahmeeinheit 11, Drehen des Bolzens 41 zum Formschluss des Steges 42 mit einem Ausschnitt 43 einer Befestigungserhebung 39.

Die Erfindung stellt weiterhin ein Verfahren zum lösbaren Befestigen eines Greifers 2 an einem Roboter, insbesondere einem Delta-Roboter 3, bereit, wobei eine Koppeleinheit 25 und eine Aufnahmeeinheit 11 vorgesehen sind, umfassend die folgenden Schritte:
Anordnen der Koppeleinheit 25 an der Aufnahmeeinheit 11, Ausrichten der Zuordnung der Koppeleinheit 25 in Bezug auf die Aufnahmeeinheit 11 an Hand der jeweiligen Oberflächenkontur und gegebenenfalls unter Einsatz eines Justierbolzens 48, Verschrauben der Aufnahmeeinheit 11 mit der Koppeleinheit 25 mittels einer Überwurfmutter 45.

Das Verfahren kann den weiteren Schritt des Erhöhens der Klemmkraft der Verschraubung durch Beaufschlagen eines Druckbolzens 49 mit Druckluft umfassen.

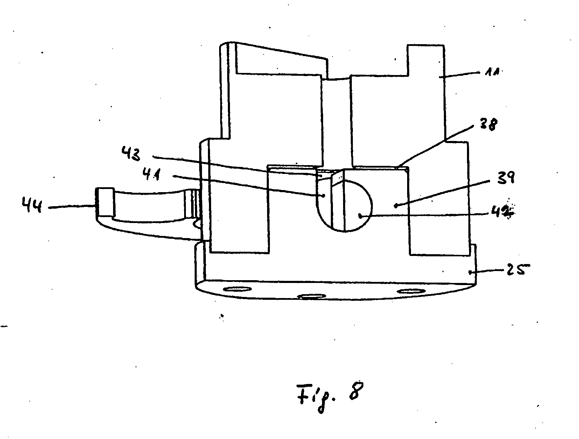

In Figur 8 ist eine vierte Ausführungsform der erfindungsgemäßen Befestigungsvorrichtung dargestellt. Die Koppeleinheit 25 ist in einem eingesetzten Zustand in der Aufnahmeeinheit 11 dargestellt. Die Aufnahmeeinheit 11 weist eine Ausnehmung 38 auf, in die die Befestigungserhebung 39 der Koppeleinheit 25 eingeführt ist. Der Steg 42 des Bolzens 41 durchdringt einen Ausschnitt 43 der Befestigungserhebung 39. Der Steg 42 ist halbkreisförmig ausgebildet.

Sind die Aufnahmeeinheit 11 und die Kopplungseinheit 25 fest verbunden, so liegt der halbkreisförmige Steg 42 vollständig an der Rundung des Ausschnittes 43 an und die ebene Fläche des Steges 42 weist in Richtung der Aufnahmeeinheit 11.

In diesem Zustand ist ein Bügel 44 an die Außenkontur der Aufnahmeeinheit 11 geklappt.

Zum Lösen der Koppeleinheit 25 von der Aufnahmeeinheit 11 wird der Bügel 44 von der Außenkontur der Aufnahmeeinheit 11 weg geschwenkt. Durch Drehen des Bügels 44 und somit des mit ihm verbundenen Bolzens 41 um 180° wird der Steg 42 im Ausschnitt 43 ebenfalls um 180° gedreht, so dass der Steg 42 nicht mehr mit einem Hinterschnitt im Ausschnitt 43 festgelegt ist, und der Ausschnitt 43 vom Steg 42 entfernt werden kann. Auf diese Weise kann die Koppeleinheit 25 aus der Aufnahmeeinheit 11 entfernt werden.

Zum Verbinden der Koppeleinheit 25 mit der Aufnahmeeinheit 11 wird der Steg 42 des Bolzens 41 in die zuvor beschriebene Stellung gebracht. Nach Einsetzen der Koppeleinheit 25 in die Aufnahmeeinheit 11 wird der Bolzen 41 mit seinem Steg 42 vermittels des Bügels um 180° gedreht. Anschließend wird der Bügel 44 in Anlage an die Außenkontur der Aufnahmeeinheit 11 gebracht, wo er zweckmäßigerweise gesichert werden kann.

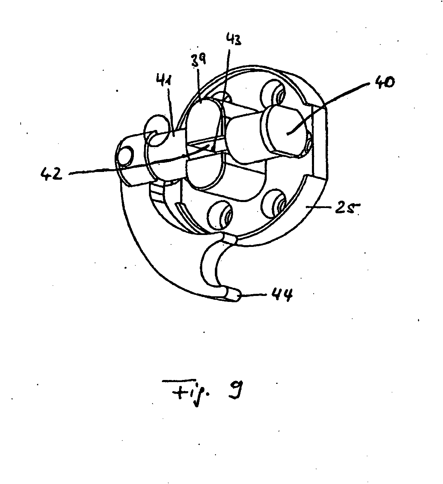

In Figur 9 ist der obere Teil der Koppeleinheit 25 dargestellt. Der Steg 42 des Bolzens 41 der Aufnahmeeinheit 11 ist von dem Ausschnitt 43 der Befestigungserhebung 39 aufgenommen. Der Bügel 44 befindet sich in der festgelegten Position. An der dem Bügel 44 gegenüberliegenden Seite des Bolzens 41 ist der Kopf einer Schraube 40 zu sehen. Mit dieser Schraube 40 kann der Bolzen befestigt werden. Der Bügel 44 liegt gespannt an der Außenkontur der Aufnahmeeinheit 11 an.

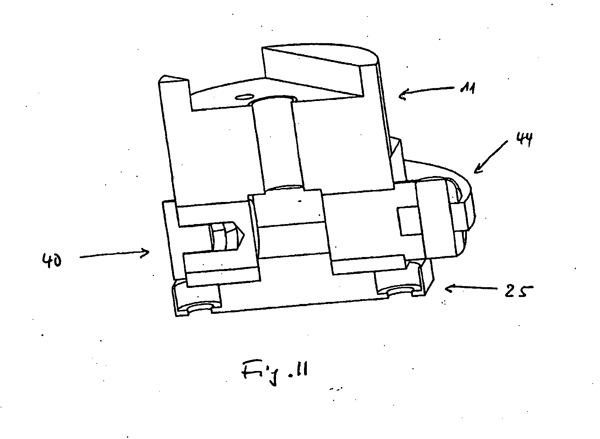

In Figur 11 sind Koppeleinheit 25 und Aufnahmeeinheit 11 im zusammengesetzten Zustand dargestellt.

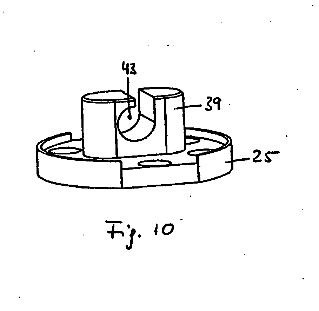

In Figur 10 ist ebenfalls der obere Teil der Koppeleinheit 25 dargestellt. In der Befestigungserhebung 39 ist der Ausschnitt 43 erkennbar. Der Ausschnitt 43 ist so gestaltet, dass der halbkreisförmige Steg 42 in der Montageposition in den Ausschnitt 43 eintreten kann. Nach Drehen des Steges 42 um 180° kommt dann der runde Teil des Steges 42 voll zur Anlage am Ausschnitt 43.

Weitere Ausgestaltungen des Steges 42 sind möglich, wobei der Ausschnitt 43 entsprechend angepasst werden muss.

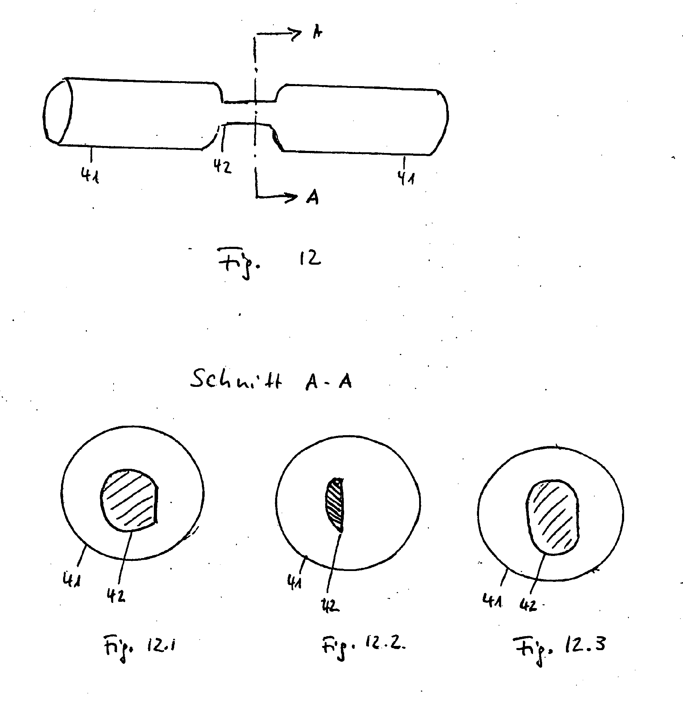

So kann an Stelle der halbkreisförmigen Ausbildung des Steges 42 ausgehend von einer zylindrischen Form eine Aussparung in Form eines Kreissegments vorgesehen werden. Die Segmenthöhe kann je nach Stabilitätsanforderungen kleiner (Figur 12.1) oder größer (Figur 12.2) als der Radius sein. Der Mittelpunktswinkel ist vornehmlich 180° Grad.

Gegebenenfalls vorteilhaft kann die Ausbildung des Querschnittes des Steges 42, als Zylinder mit gegenüberliegenden ausgesparten Kreissegmenten sein (Fig. 12.3).

In Figur 12 ist der Bolzen 41 und der dazugehörige Steg 42 dargestellt, wobei im jeweiligen Schnitt A-A unterschiedliche Ausbildungen des Steges dargestellt sind. In Figur 12.1 entspricht der Querschnitt des Steges einem Kreissegment, dessen Fläche größer ist als die eines Halbkreises. In Figur 12.2 entspricht der Querschnitt des Steges einem Kreissegment mit einer kleineren Fläche als ein Halbkreis. In Figur 12.3 entspricht der Querschnitt des Steges einem Vollkreis in dem zwei gegenüberliegende Kreisabschnitte ausgespart sind.

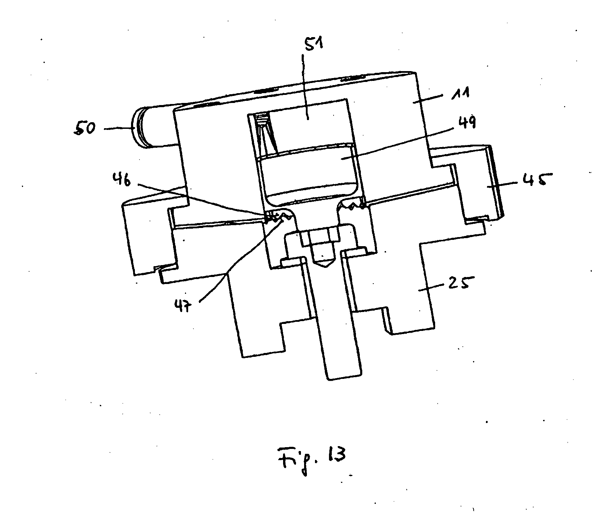

In Figur 13 ist eine fünfte Ausführungsform der erfindungsgemäßen Befestigungsvorrichtung dargestellt. Die Koppeleinheit 25 ist im eingesetzten Zustand in der Aufnahmeeinheit 11 dargestellt. Die Koppeleinheit 25 ist mit der Aufnahmeeinheit 11 mit einer Überwurfmutter 45 verbunden, die bereichsweise die Koppeleinheit 25 und die Aufnahmeeinheit 11 in Umfangsrichtung ganz umfasst. Die Aufnahmeeinheit 11 weist Erhebungen 46 auf, die mit Einkerbungen 47 der Koppeleinheit 25 derart korrespondieren, dass die Koppeleinheit 25 nur in korrekter Orientierung in die Aufnahmeeinheit 11 eingesetzt werden kann. Die Überwurfmutter 45 wird von Hand angezogen. Zur Erhöhung der Klemmkraft der Überwurfmutter 45 wird ein Druckbolzen 49 mit Luftdruck derart beaufschlagt, dass die Koppeleinheit 25 gegenüber der Aufnahmeeinheit 11 verspannt wird. Die durch die Druckluft aufgebrachte Klemmkraft wirkt vorteilhafterweise in im Wesentlichen gleicher Richtung wie die Spannkraft der Überwurfmutter 45.

Insbesondere kann die Druckluftbeaufschlagung dadurch aktiviert werden, dass eine Tür zu der Anlage geschlossen wird, in der die erfindungsgemäße Befestigungsvorrichtung verwendet wird.

Der Druckluftbolzen 49 ist einer Druckluftkammer 51 zugeordnet, der die Druckluft über einen Druckluftanschluss 50 zugeführt werden kann.

Um die Koppeleinheit 25 von der Aufnahmeeinheit 11 zu trennen, wird der Druckluftbolzen 49 druckfrei gestellt. Dadurch wird die Klemmkraft der Überwurfmutter 45 reduziert, so dass die Überwurfmutter 45 von Hand gelöst werden kann.

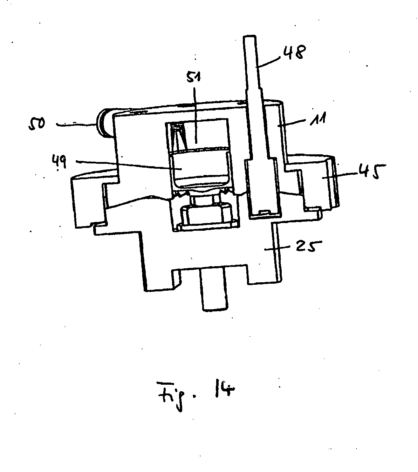

In Figur 14 ist eine Modifikation der Ausführungsform von Figur 11 dargestellt. Zur korrekten Anordnung der Koppeleinheit 25 in Bezug auf die Aufnahmeeinheit 11 ist neben den Erhebungen 46 und den Einkerbungen 47 ein Justierbolzen 48 vorgesehen. Der Justierbolzen 48 ist in der Aufnahmeeinheit 11 vorgesehen und steht in einer Ausnehmung in der Koppeleinheit 25.

In der ersten und dritten Ausführungsform kann anstelle von einer Spannschraube ein Aktuator verwendet werden, um die Spannplatte festzulegen oder vorzuspannen. Der Aktuator kann durch eine Steuer- und Regeleinheit, insbesondere durch die zentrale Steuer- und Regeleinheit, betätigt wird.

Insbesondere kann auch der Elektromagnet oder der schaltbare Permanentmagnet der weiteren Ausführungsformen durch eine Steuer- und Regeleinheit betätigt werden, wobei es sich auch dabei vornehmlich um eine zentrale Steuer- und Regeleinheit handelt.

Eine zentrale Steuer- und Regeleinheit ist ausgelegt auch die Steuerung beziehungsweise Regelung der Bewegung des Roboters und Greifers zu durchzuführen.

## Patentansprüche

1. Vorrichtung zum lösbaren Befestigen eines Greifers (2) an einem Roboter, insbesondere einem Delta-Roboter (3),
mit einer Aufnahmeeinheit (11) und einer Koppeleinheit (25), zwischen denen wenigstens ein form- und/oder kraftschlüssiges Verbindungsmittel vorgesehen ist,
wobei die Aufnahmeeinheit (11) an einem Roboter und die Koppeleinheit (25) an einem Greifer oder die Koppeleinheit (25) an einem Roboter und die Aufnahmeeinheit (11) an einem Greifer anbringbar ist, und die Aufnahmeeinheit (11) einen mit einem Hinterschnitt versehenen Anschlag (15) zur Aufnahme eines ersten Abschnitts (27) der Koppeleinheit (25) aufweist,
die Aufnahmeeinheit (11) und die Koppeleinheit (25) komplementäre Formelemente (13, 29; 60, 61) aufweisen, die ausgelegt sind, ineinander eingesetzt zu werden, und
die Aufnahmeeinheit (11) weiterhin ein Spannelement (18) aufweist, um die Koppeleinheit (25) im Anschlag der Aufnahmeeinheit (11) zu halten,
**dadurch gekennzeichnet, dass**
der Anschlag (15) durch eine Vertiefung in einer Seitenwand (14) an der Aufnahmeeinheit (11) gebildet ist, sodass der Hinterschnitt geformt ist.

2. Vorrichtung nach Anspruch 1, wobei die komplementären Formelemente (13, 29; 60, 61) so ausgelegt sind, dass die Koppeleinheit (25) in nur einer Orientierung in die Aufnahmeeinheit (11) eingesetzt werden kann.

3. Vorrichtung nach einem der vorangehenden Ansprüche, wobei der Anschlag (15) als Nut mit zueinander konisch verlaufenden Seitenflächen (16, 17) ausgebildet ist, und der erste Abschnitt der Koppeleinheit (11) eine komplementäre konische Form aufweist, sodass ein spielfreier Sitz des ersten Abschnitts (27) der Koppeleinheit (25) im Anschlag (15) der Aufnahmeeinheit (11) gewährleistet wird.

4. Vorrichtung nach einem der vorangehenden Ansprüche, wobei das Spannelement (18) und der Anschlag (15) an zwei gegenüberliegenden Seiten einer Grundplatte (12) der Aufnahmeeinheit (11) vorgesehen sind, und die komplementären Formelemente (13, 29; 60, 61) zwischen dem Spannelement (18) und dem Anschlag (15) vorgesehen sind.

5. Vorrichtung nach einem der vorangehenden Ansprüche, wobei das Spannelement (18) einen Anschlag (22) mit einem Hinterschnitt aufweist, der ausgelegt ist, einen zweiten Abschnitt (28) der Koppeleinheit (25) aufzunehmen, der dem ersten Abschnitt (27) der Koppeleinheit (25) gegenüber liegt.

6. Vorrichtung nach Anspruch 5, wobei der Anschlag (22) des Spannelements (18) eine in ihrem mittleren Erstreckungsbereich zurückgesetzte Nut mit konischen Seitenflächen (23, 24) ist, und wobei der zweite Abschnitt (28) der Koppeleinheit (25) ebenfalls konisch ausgebildet ist.

7. Vorrichtung nach einem der vorangehenden Ansprüche, wobei das Spannelement (18) eine Spannplatte (20) aufweist, in der der Anschlag (22) ausgebildet ist, und eine Schraube (26) um die Spannplatte (20) in Richtung der Koppeleinheit (25) festzulegen und/oder vorzuspannen.

8. Vorrichtung nach einem der vorangehenden Ansprüche, wobei die Vertiefung des Anschlags (15) als Nut gebildet wird, die in Erstreckungsrichtung der Seitenwand (14) verläuft, wobei die Nut eine in ihrem in Erstreckungsrichtung mittleren Bereich zurückgesetzte Form aufweist, sodass eine sichere Festlegung der Koppeleinheit (25) in Erstreckungsrichtung der Nut ermöglicht wird.

9. Vorrichtung nach einem der vorangehenden Ansprüche, wobei der Anschlag (15) in einem Gegenspannelement (52) ausgebildet ist, das ausgelegt ist, sich in einer zur Bewegung des Spannelements (18) gegenüberliegende Richtung zu bewegen, um die Koppeleinheit (25) zwischen dem Spannelement (18) und dem Gegenspannelement (52) zu befestigen.

10. Vorrichtung nach Anspruch 9, wobei die Schraube (19) sich durch die Aufnahmeeinheit (11) erstreckt, und für das Spannelement (18) und das Gegenspannelement (52) Bereiche mit jeweils gegensätzlicher Steigung aufweist, mit denen das Spannelement (18) und Gegenspannelement (52) jeweils in Eingriff sind.

11. Vorrichtung nach Anspruch 9 oder 10, wobei der Anschlag (15) des Gegenspannelements (52) und der Anschlag (22) des Spannelements (18) als zueinander parallele, geradlinige Nuten ausgebildet sind, und die Schraube (19) je nach Verdrehstellung in eine Vertiefung (62) in der Koppeleinheit (25) eingreift, um die Koppeleinheit (25) bezüglich der Aufnahmeeinheit (11) in der Erstreckungsrichtung der Nuten festzulegen.

12. Vorrichtung nach einem der Ansprüche 1 bis 8, wobei das Spannelement (18) ausgelegt ist, die Koppeleinheit mittels magnetischer Kraft zu halten.

13. Vorrichtung nach Anspruch 12, wobei die Aufnahmeeinheit (11) einen Rastbolzen (35) aufweist, der in die Koppeleinheit eingreift, um zu verhindern, dass sich der erste Abschnitt (27) der Koppeleinheit (25) aus dem Anschlag (15) löst, wenn die magnetische Haltekraft ausgeschaltet wird.

14. Verfahren zum lösbaren Befestigen eines Greifers (2) an einem Roboter, insbesondere einem Delta-Roboter (3), wobei eine Koppeleinheit (25) und eine Aufnahmeeinheit (11) vorgesehen sind, wobei die Aufnahmeeinheit (11) an einem Roboter und die Koppeleinheit (25) an einem Greifer oder die Koppeleinheit (25) an einem Roboter und die Aufnahmeeinheit (11) an einem Greifer anbringbar ist, umfassend die folgenden Schritte:
- Hinterschneidendes Einsetzen eines ersten Abschnitts (27) der Koppeleinheit (25) in einen Anschlag (15) der Aufnahmeeinheit (11), der durch eine Vertiefung in einer Seitenwand (14) an der Aufnahmeeinheit (11) gebildet ist, sodass ein Hinterschnitt geformt wird, während die Aufnahmeeinheit (11) und die Koppeleinheit (25) in einem spitzen Winkel bezüglich ihrer normalen Betriebsstellung zueinander sind,
- Bewegen des dem ersten Abschnitt (27) gegenüberliegenden zweiten Abschnitts (28) der Koppeleinheit (25), bis die Aufnahmeeinheit (11) und die Koppeleinheit (25) zueinander in normaler Betriebsstellung sind, wobei dabei komplementäre Formelemente in der Aufnahmeeinheit (11) und in der Koppeleinheit (25) ineinander eingreifen,
- Aufbringen einer Kraft durch ein Spannelement (18), um die Koppeleinheit (25) im Anschlag mit der Aufnahmeeinheit (11) zu halten.

## Claims

1. Apparatus for detachably fastening a gripper (2) to a robot, in particular a delta robot (3),
comprising a receiving unit (11) and a coupling unit (25) between which at least one form-fit and/or force-fit connecting means is provided,
wherein the receiving unit (11) is adapted to be provided at a robot and the coupling unit (25) is adapted to be provided at a gripper or the coupling unit (25) is adapted to be provided at a robot and the receiving unit (11) is adapted to be provided at a gripper, and
the receiving unit (11) includes a limit stop (15) for receiving a first section (27) of the coupling unit (25) therein, the limit stop (15) being provided with an undercut,
the receiving unit (11) and the coupling unit (25) include complementary form elements (13, 29; 60, 61) designed to be inserted one into the other, and
the receiving unit (11) further includes a clamping element (18) for retaining the coupling unit (25) in the limit stop of the receiving unit (11),
**characterized in that**
the limit stop (15) is formed by means of an indentation in a side wall (14) at the receiving unit (11) such that the undercut is formed.

2. Apparatus according to claim 1, wherein the complementary form elements (13, 29; 60, 61) are designed in such a manner that the coupling unit (25) can be inserted into the receiving unit (11) in just one orientation.

3. Apparatus according to any one of the preceding claims, wherein the limit stop (15) is formed as a groove with side faces (16, 17) tapering towards each other, and the first section of the coupling unit (25) is of a complementary conical shape so that a seat without play of the first section (27) of the coupling unit (25) in the limit stop (15) of the receiving unit (11) is ensured.

4. Apparatus according to any one of the preceding claims, wherein the clamping element (18) and the limit stop (15) are provided at two opposite sides of a base plate (12) of the receiving unit (11), and the complementary form elements (13, 29; 60, 61) are provided between the clamping element (18) and the limit stop (15).

5. Apparatus according to any one of the preceding claims, wherein the clamping element (18) includes a limit stop (22) with an undercut designed to receive a second section (28) of the coupling unit (25) which is provided opposite to the first section (27) of the coupling unit (25).

6. Apparatus according to claim 5, wherein the limit stop (22) of the clamping element (18) is a groove, recessed in its center region of extension, with conical side faces (23, 24) and wherein the second section (28) of the coupling unit (25) is also conically shaped.

7. Apparatus according to any one of the preceding claims, wherein the clamping element (18) includes a clamping plate (20) in which the limit stop (22) is formed, and a screw (26) for locking and/or pre-clamping the clamping plate (20) towards the coupling unit (25).

8. Apparatus according to any one of the preceding claims, wherein the indentation of the limit stop (15) is formed as a groove extending in the direction of extension of the side wall (14), said groove being of a shape recessed in its center region in the direction of its extension such that safe locking of the coupling unit (25) in the direction of extension of the groove is enabled.

9. Apparatus according to any one of the preceding claims, wherein the limit stop (15) is formed in a counter clamping element (52) designed to move into a direction opposing the movement of the clamping element (18) in order to fasten the coupling unit (25) between the clamping element (18) and the counter clamping element (52).

10. Apparatus according to claim 9, wherein the screw (19) passes through the receiving unit (11) and includes regions with opposite pitches for the clamping element (18) and for the counter clamping element (52), respectively, the clamping element (18) and the counter clamping element (52) being in engagement therewith, respectively.

11. Apparatus according to either claim 9 or 10, wherein the limit stop (15) of the counter clamping element (52) and the limit stop (22) of the clamping element (18) are designed as straight grooves parallel towards each other, and the screw (19), depending on the turning position, engages an indentation (62) in the coupling unit (25) so as to lock the coupling unit (25) with regard to the receiving unit (11) in the direction of extension of the grooves.

12. Apparatus according to either of claims 1 to 8, wherein the clamping element (18) is designed to retain the coupling unit by means of a magnetic force.

13. Apparatus according to claim 12, wherein the receiving unit (11) includes a locking pin (35) engaging with the coupling unit to prevent that the first section (27) of the coupling unit (25) releases from the limit stop (15) when the magnetic retaining force is switched off.

14. Method for detachably fastening a gripper (2) to a robot, in particular a delta robot (3), wherein a coupling unit (25) and a receiving unit (11) are provided, wherein the receiving unit (11) is adapted to be provided at a robot and the coupling unit (25) is adapted to be provided at a gripper or the coupling unit (25) is adapted to be provided at a robot and the receiving unit (11) is adapted to be provided at a gripper, comprising the following steps:
- in undercut manner inserting a first section (27) of the coupling unit (25) into a limit stop (15) of the receiving unit (11), while the receiving unit (11) and the coupling unit (25) are at an acute angle towards each other with regard to their normal operating position, the limit stop (15) being formed by means of an indentation in a side wall (14) at the receiving unit (11) such that an undercut is formed;
- moving the second section (28) of the coupling unit (25) being provided opposite to the first section (27) until the receiving unit (11) and the coupling unit (25) are in normal operating position towards each other, wherein complementary form elements in the receiving unit (11) and in the coupling unit (25) engage with each another;
- applying a force by means of a clamping element (18) to retain the coupling unit (25) in abutment with the receiving unit (11).

## Revendications

1. Dispositif pour la fixation amovible d'un préhenseur (2) à un robot, notamment un robot Delta (3), comprenant une unité d'accueil (1) et une unité de couplage (25) entre lesquels est prévu au moins un moyen de liaison par complémentarité de formes et/ou par adhérence,
dispositif dans lequel l'unité d'accueil (11) peut être rapportée sur un robot et l'unité de couplage (25) sur un préhenseur, ou l'unité de couplage (25) sur un robot et l'unité d'accueil (11) sur un préhenseur, et l'unité d'accueil (11) présente une butée (15) pourvue d'une contre-dépouille, pour accueillir un premier tronçon (27) de l'unité de couplage (25),
l'unité d'accueil (11) et l'unité de couplage (25) comportent des éléments de forme (13, 29; 60, 61) complémentaires, qui sont conçus pour être engagés les uns dans les autres, et
l'unité d'accueil (11) comporte, par ailleurs, un élément de serrage (18) pour maintenir l'unité de couplage (25) dans la butée de l'unité d'accueil (11),
**caractérisé en ce que**
la butée (15) est réalisée par un creux dans une paroi latérale (14) de l'unité d'accueil (11), de manière à ce que soit formée la contre-dépouille.

2. Dispositif selon la revendication 1, dans lequel les éléments de forme (13, 29; 60, 61) complémentaires sont conçus de manière à ce l'unité de couplage (25) ne puisse être insérée que selon une seule orientation, dans l'unité d'accueil (11).

3. Dispositif selon l'une des revendications précédentes, dans lequel la butée (15) est réalisée en tant que rainure avec des surfaces latérales (16, 17) s'étendant de manière conique l'une par rapport à l'autre, et le premier tronçon de l'unité de couplage (25) présente une forme conique complémentaire, de manière à garantir une assise sans jeu du premier tronçon (27) de l'unité de couplage (25) dans la butée (15) de l'unité d'accueil (11).

4. Dispositif selon l'une des revendications précédentes, dans lequel l'élément de serrage (18) et la butée (15) sont prévus sur deux côtés opposés d'une plaque de base (12) de l'unité d'accueil (11), et les éléments de forme (13, 29; 60, 61) complémentaires sont prévus entre l'élément de serrage (18) et la butée (15).

5. Dispositif selon l'une des revendications précédentes, dans lequel l'élément de serrage (18) comporte une butée (22) avec une contre-dépouille, qui est conçue pour accueillir un deuxième tronçon (28) de l'unité de couplage (25) opposé au premier tronçon (27) de l'unité de couplage (25).

6. Dispositif selon la revendication 5, dans lequel la butée (22) de l'élément de serrage (18) est une rainure en retrait dans la zone centrale de son étendue et comportant des surfaces latérales coniques (23, 24), et dans lequel le deuxième tronçon (28) de l'unité de couplage (25) est également de configuration conique.

7. Dispositif selon l'une des revendications précédentes, dans lequel l'élément de serrage (18) comprend une plaque de serrage (20) dans laquelle est réalisée la butée (22), et une vis (26), en vue de fixer et/ou d'assurer une précontrainte de la plaque de serrage (20) en direction de l'unité de couplage (25).

8. Dispositif selon l'une des revendications précédentes, dans lequel le creux de la butée (15) est réalisé en tant que rainure, qui s'étend dans la direction de l'étendue de la paroi latérale (14), la rainure présentant une forme en retrait dans la zone centrale de la direction de son étendue, en permettant ainsi une immobilisation fiable de l'unité de couplage (25) dans la direction d'étendue de la rainure.

9. Dispositif selon l'une des revendications précédentes, dans lequel la butée (15) est réalisée dans un élément de serrage conjugué (52), qui est conçu pour se déplacer dans une direction opposée au déplacement de l'élément de serrage (18), pour fixer l'unité de couplage (25) entre l'élément de serrage (18) et l'élément de serrage conjugué (52).

10. Dispositif selon la revendication 9, dans lequel la vis (19) s'étend à travers l'unité d'accueil (11) et présente des zones de pas de sens opposé, qui sont respectivement destinées à l'élément de serrage (18) et à l'élément de serrage conjugué (52), et sont respectivement en prise avec l'élément de serrage (18) et l'élément de serrage conjugué (52).

11. Dispositif selon la revendication 9 ou la revendication 10, dans lequel la butée (15) de l'élément de serrage conjugué (52) et la butée (22) de l'élément de serrage (18) sont réalisées sous forme de rainures rectilignes parallèles l'une à l'autre, et la vis (19), suivant la position de rotation relative, s'engage dans un creux (62) dans l'unité de couplage (25), en vue d'immobiliser l'unité de couplage (25) par rapport à l'unité d'accueil (11) dans la direction d'étendue des rainures.

12. Dispositif selon l'une des revendications 1 à 8, dans lequel l'élément de serrage (18) est conçu pour maintenir l'unité de couplage au moyen d'une force magnétique.

13. Dispositif selon la revendication 12, dans lequel l'unité d'accueil (11) présente une broche d'encliquetage (35) qui vient en prise dans l'unité de couplage, pour empêcher que le premier tronçon (27) de l'unité de couplage (25) se détache de la butée (15) lorsque l'on interrompt la force de maintien magnétique.

14. Procédé pour la fixation amovible d'un préhenseur (2) à un robot, notamment un robot Delta (3), l'ensemble comprenant une unité de couplage (25) et une unité d'accueil (11), et l'unité d'accueil (11) pouvant être rapportée sur un robot et l'unité de couplage (25) sur un préhenseur, ou l'unité de couplage (25) sur un robot et l'unité d'accueil (11) sur un préhenseur, le procédé comprenant les étapes suivantes :
- insertion en contre-dépouille d'un premier tronçon (27) de l'unité de couplage (25) dans une butée (15) de l'unité d'accueil (11), qui est réalisée par un creux dans une paroi latérale (14) de l'unité d'accueil (11) de manière à ce que soit formée une contre-dépouille, alors que l'unité d'accueil (11) et l'unité de couplage (25) forment entre elles un angle aigu par rapport à leur position de fonctionnement normale,
- déplacement du deuxième tronçon (28) de l'unité de couplage (25), qui est opposé au premier tronçon (27), jusqu'à ce que l'unité d'accueil (11) et l'unité de couplage (25) se trouvent, l'une par rapport à l'autre, dans la position normale de fonctionnement, des éléments de forme complémentaires dans l'unité d'accueil (11) et l'unité de couplage (25) venant en prise réciproque à cette occasion,
- application d'une force par un élément de serrage (18) pour maintenir l'unité de couplage (25) en butée avec l'unité d'accueil (11).
